(19) Europäisches Patentamt
European Patent Office
Office européen des brevets

(11) **EP 4 734 627 A1**

(12) **EUROPEAN PATENT APPLICATION**
published in accordance with Art. 153(4) EPC

(43) Date of publication:
**29.04.2026 Bulletin 2026/18**

(21) Application number: **23942728.9**

(22) Date of filing: **26.06.2023**

(51) International Patent Classification (IPC):
**H04W 72/04** $^{(2023.01)}$

(52) Cooperative Patent Classification (CPC):
**H04L 5/0051; H04L 5/00; H04L 5/0048;
H04L 5/0094; H04W 72/25**

(86) International application number:
**PCT/CN2023/102491**

(87) International publication number:
**WO 2025/000200 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Quectel Wireless Solutions Co., Ltd.
Shanghai 201601 (CN)**

(72) Inventors:
• **LYU, Ling
Shanghai 201601 (CN)**
• **ZHAO, Zheng
Shanghai 201601 (CN)**
• **YANG, Zhongzhi
Shanghai 201601 (CN)**

(74) Representative: **Fish & Richardson P.C.
Highlight Business Towers
Mies-van-der-Rohe-Straße 8
80807 München (DE)**

(54) **METHOD AND APPARATUS FOR SIDELINK COMMUNICATION**

(57) The present application provides a method and an apparatus for sidelink communication, which are conductive to performing initial beam pairing by two or more terminal devices in a sidelink communications system based on a sidelink. The method includes: performing, by a first terminal device, periodic transmission of a first sidelink CSI-RS by using a plurality of transmit beams, where the first sidelink CSI-RS is used by a target terminal device corresponding to the first terminal device to perform initial beam pairing, where a transmission resource corresponding to the first sidelink CSI-RS is determined based on a first parameter of the periodic transmission.

Performing, by a first terminal device, transmission of a first sidelink CSI-RS by using a plurality of transmit beams — S510

FIG. 5

EP 4 734 627 A1

## Description

## TECHNICAL FIELD

The present application relates to the field of communications technologies, and more specifically, to a method and an apparatus for sidelink communication.

## BACKGROUND

When communication is performed in a frequency band (for example, a millimeter wave band) with a relatively high frequency, a network device may implement system coverage based on a large-scale antenna array through beam sweeping. Beam sweeping requires specific time and spatial resources, and relatively high power consumption. Therefore, the network device and a terminal device determine an optimal transmit-receive beam pair through beam pairing for uplink or downlink transmission.

In a sidelink communications system, how the terminal device performs beam pairing based on a sidelink is a problem to be resolved.

## SUMMARY

The present application provides a method and an apparatus for sidelink communication. The following describes the aspects involved in embodiments of the present application.

According to a first aspect, a method for sidelink communication is provided, including: performing, by a first terminal device, periodic transmission of a first sidelink CSI-RS by using a plurality of transmit beams, where the first sidelink CSI-RS is used by a target terminal device corresponding to the first terminal device to perform initial beam pairing, where a transmission resource corresponding to the first sidelink CSI-RS is determined based on a first parameter of the periodic transmission.

According to a second aspect, a method for sidelink communication is provided, including: receiving, by a second terminal device, a first sidelink CSI-RS obtained through periodic transmission performed by a first terminal device by using a plurality of transmit beams, where the first sidelink CSI-RS is used by a target terminal device corresponding to the first terminal device to perform initial beam pairing, where a transmission resource corresponding to the first sidelink CSI-RS is determined based on a first parameter of the periodic transmission.

According to a third aspect, an apparatus for sidelink communication is provided, where the apparatus is a first terminal device, and the first terminal device includes: a transmitting unit, performing periodic transmission of a first sidelink CSI-RS by using a plurality of transmit beams, where the first sidelink CSI-RS is used by a target terminal device corresponding to the first terminal device to perform initial beam pairing, where a transmission resource corresponding to the first sidelink CSI-RS is determined based on a first parameter of the periodic transmission.

According to a fourth aspect, an apparatus for sidelink communication is provided, where the apparatus is a second terminal device, and the second terminal device includes: a receiving unit, receiving a first sidelink CSI-RS obtained through periodic transmission performed by a first terminal device by using a plurality of transmit beams, where the first sidelink CSI-RS is used by a target terminal device corresponding to the first terminal device to perform initial beam pairing, where a transmission resource corresponding to the first sidelink CSI-RS is determined based on a first parameter of the periodic transmission.

According to a fifth aspect, a communications apparatus is provided, including a memory and a processor, where the memory is configured to store a program, and the processor is configured to invoke the program in the memory to execute a method according to the first aspect or the second aspect.

According to a sixth aspect, an apparatus is provided, including a processor configured to invoke a program from a memory to execute a method according to the first aspect or the second aspect.

According to a seventh aspect, a chip is provided, including a processor configured to invoke a program from a memory to cause a device on which the chip is installed to execute a method according to the first aspect or the second aspect.

According to an eighth aspect, a computer-readable storage medium is provided, where the computer-readable storage medium stores a program, and the program causes a computer to execute a method according to the first aspect or the second aspect.

According to a ninth aspect, a computer program product is provided, where the computer program product includes a program, and the program causes a computer to execute a method according to the first aspect or the second aspect.

According to a tenth aspect, a computer program is provided, where the computer program causes a computer to execute a method according to the first aspect or the second aspect.

In embodiments of the present application, a first terminal device periodically transmits a first sidelink CSI-RS by using a plurality of transmit beams. For a target terminal device with which the first terminal device needs to communicate, the periodically transmitted first sidelink CSI-RS may be used by the target terminal device to perform initial beam pairing with the first terminal device.

## BRIEF DESCRIPTION OF THE DRAWINGS

FIG. 1 shows a wireless communications system to which embodiments of the present application are applied.

FIG. 2 is an example diagram of NR-V2X communication.

FIG. 3 is a schematic diagram of separately performing beam sweeping by a transmit terminal and a receive terminal.

FIG. 4 is a schematic diagram of beam sweeping in a case in which a plurality of transmit terminal devices correspond to one receive terminal device.

FIG. 5 is a schematic flowchart of a method for sidelink communication according to an embodiment of the present application.

FIG. 6 is a schematic diagram of an implementation of a first transmission period when a subcarrier spacing is 60 kHz in FIG. 5.

FIG. 7 is a schematic diagram of a slot structure of a first sidelink CSI-RS according to an embodiment of the present application.

FIG. 8 is a schematic diagram of another slot structure of a first sidelink CSI-RS according to an embodiment of the present application.

FIG. 9 is a schematic diagram of still another slot structure of a first sidelink CSI-RS according to an embodiment of the present application.

FIG. 10 is a schematic diagram of yet another slot structure of a first sidelink CSI-RS according to an embodiment of the present application.

FIG. 11 is a schematic diagram of still yet another slot structure of a first sidelink CSI-RS according to an embodiment of the present application.

FIG. 12 is a schematic diagram of a further slot structure of a first sidelink CSI-RS according to an embodiment of the present application.

FIG. 13 is a schematic diagram of a plurality of beam response transmission occasions that are in a one-to-one correspondence with a plurality of transmit beams.

FIG. 14 is a schematic flowchart of a possible implementation according to an embodiment of the present application.

FIG. 15 is a schematic diagram of performing resource sensing by a terminal device.

FIG. 16 is a schematic structural diagram of an apparatus for sidelink communication according to an embodiment of the present application.

FIG. 17 is a schematic structural diagram of another apparatus for sidelink communication according to an embodiment of the present application.

FIG. 18 is a schematic structural diagram of a communications apparatus according to an embodiment of the present application.

## DETAILED DESCRIPTION OF THE EMBODIMENTS

The following describes the technical solutions in embodiments of the present application with reference to the accompanying drawings in embodiments of the present application. Apparently, the described embodiments are some rather than all of embodiments of the present application. Based on embodiments of the present application, all other embodiments obtained by a person of ordinary skill in the art without creative efforts fall within the protection scope of the present application.

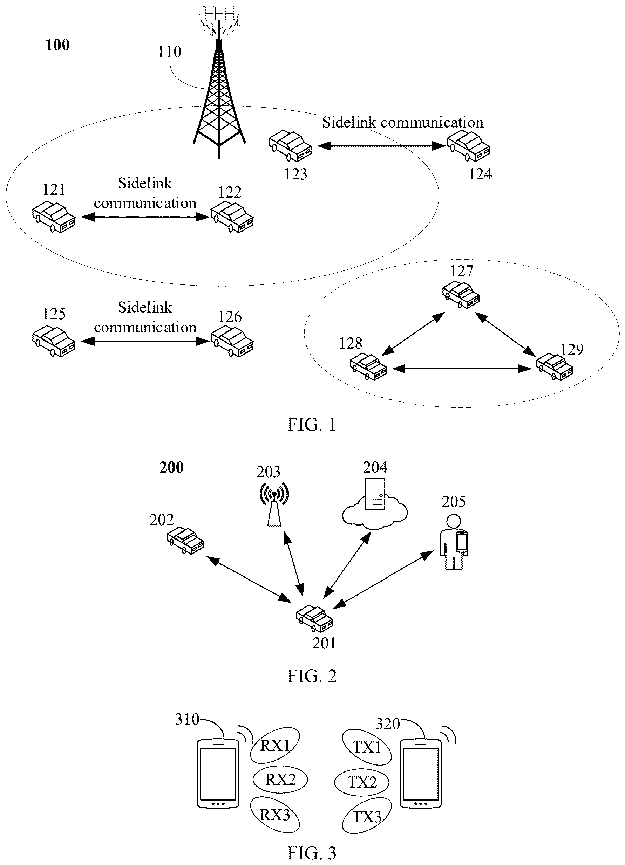

FIG. 1 is an example diagram of a system architecture of a wireless communications system 100 to which embodiments of the present application are applicable. The wireless communications system 100 may include a network device 110 and terminal devices 121 to 129. The network device 110 may provide communication coverage for a specific geographic area, and may communicate with terminals within the coverage area.

In some implementations, terminal devices may communicate with each other over a sidelink (sidelink, SL). The sidelink communication may also be referred to as proximity services (proximity services, ProSe) communication, unilateral communication, side link communication, device-to-device (device to device, D2D) communication, or the like.

In other words, sidelink data is transmitted between terminal devices over a sidelink. The sidelink data may include data and/or control signalling. In some implementations, the sidelink data may be, for example, a physical sidelink control channel (physical sidelink control channel, PSCCH), a physical sidelink shared channel (physical sidelink shared channel, PSSCH), a PSCCH demodulation reference signal (demodulation reference signal, DMRS), a PSSCH DMRS, or a physical sidelink feedback channel (physical sidelink feedback channel, PSFCH).

Several common sidelink communication scenarios are described below with reference to FIG. 1. Sidelink communication may include three scenarios depending on whether terminal devices on a sidelink are within a coverage range of a network device. In a scenario 1, the terminal devices perform sidelink communication within the coverage of the network device. In a scenario 2, some of the terminal devices perform sidelink communication within the coverage of the network device. In a scenario 3, the terminal devices perform sidelink communication outside the coverage of the network device.

As shown in FIG. 1, in the scenario 1, terminal devices 121 and 122 may communicate with each other over a sidelink, and the terminal devices 121 and 122 are both within the coverage of the network device 110. In other words, the terminal devices 121 and 122 are both within the coverage of the same network device 110. In this scenario, the network device 110 may transmit configuration signalling to the terminal devices 121 and 122, and accordingly, the terminal devices 121 and 122 communicate with each other over the sidelink based on the configuration signalling.

As shown in FIG. 1, in the scenario 2, terminal devices 123 and 124 may communicate with each other over a sidelink, the terminal device 123 is within the coverage of the network device 110, and the terminal device 124 is outside the coverage of the network device 110. In this scenario, the terminal device 123 receives configuration information from the network device 110, and performs communication over the sidelink based on configuration of configuration signalling. However, for the terminal device 124, since the terminal device 124 is outside the coverage of the network device 110, the terminal device 124 cannot receive configuration information from the network device 110. In this case, the terminal device 124 may obtain configuration of sidelink communication based on pre-configured (pre-configuration) configuration information and/or configuration information transmitted by the terminal device 123 within the coverage, so as to communicate with the terminal device 123 over the sidelink based on the obtained configuration.

In some cases, the terminal device 123 may transmit the configuration information to the terminal device 124 through a physical sidelink broadcast channel (physical sidelink broadcast channel, PSBCH), to configure the terminal device 124 to perform communication over the sidelink.

As shown in FIG. 1, in the scenario 3, terminal devices 125 to 129 are all outside the coverage of the network device 110 and cannot communicate with the network device 110. In this case, the terminal devices may all perform sidelink communication based on pre-configuration information.

In some cases, the terminal devices 127 to 129 outside the coverage of the network device may form a communication cluster, and the terminal devices 127 to 129 in the communication cluster may communicate with each other. In addition, the terminal device 127 in the communication cluster may serve as a central control node, which is also referred to as a cluster header (cluster header, CH). Correspondingly, the other terminal devices in the communication cluster may be referred to as "cluster members".

The terminal device 127 as the CH may have one or more of the following functions: being responsible for establishment of the communication cluster; joining and leaving of a cluster member; resource coordination, allocation of sidelink transmission resources for the cluster members, and reception of sidelink feedback information from the cluster members; resource coordination with another communication cluster; or other functions.

It should be noted that FIG. 1 exemplarily shows one network device and a plurality of terminal devices. Optionally, the wireless communications system 100 may include a plurality of network devices, and another quantity of terminal devices may be included in coverage of each network device. This is not limited in embodiments of the present application.

Optionally, the wireless communications system 100 may further include other network entities such as a network controller and a mobility management entity.

This is not limited in embodiments of the present application.

It should be understood that the technical solutions in embodiments of the present application may be applied to various communications systems, for example, a fifth generation (5th generation, 5G) system or a new radio (new radio, NR) system, a long term evolution (long term evolution, LTE) system, an LTE frequency division duplex (frequency division duplex, FDD) system, and LTE time division duplex (time division duplex, TDD). The technical solutions provided in the present application may be further applied to a future communications system, such as a 6th generation mobile communications system or a satellite communications system.

A terminal device in embodiments of the present application may also be referred to as a user equipment (user equipment, UE), an access terminal, a subscriber unit, a subscriber station, a mobile station, a mobile station (mobile station, MS), a mobile terminal (mobile Terminal, MT), a remote station, a remote terminal, a mobile device, a user terminal, a wireless communications device, a user agent, or a user apparatus. The terminal device in embodiments of the present application may be a device providing a user with voice and/or data connectivity and capable of connecting people, objects, and machines, such as a handheld device or a vehicle-mounted device having a wireless connection function. The terminal device in embodiments of the present application may be a mobile phone (mobile phone), a tablet computer (Pad), a notebook computer, a palmtop computer, a mobile internet device (mobile internet device, MID), a wearable device, a vehicle, a wireless terminal in industrial control (industrial control), a wireless terminal in self-driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in smart home (smart home), or the like. Optionally, the terminal device may be used to act as a base station. For example, the terminal device may act as a scheduling entity, which provides a sidelink signal between terminal devices in vehicle-to-everything (vehicle-to-everything, V2X) or D2D, or the like. For example, a cellular phone and a car communicate with each other by using sidelink data. A cellular phone and a smart home device communicate with each other, without relaying a communication signal by using a base station.

A network device in embodiments of the present application may be a device for communicating with the terminal device. The network device may also be referred to as an access network device or a radio access network device. For example, the network device may be a base station. The network device in embodiments of the present application may be a radio access network (radio access network, RAN) node (or device) that connects the terminal device to a wireless network. The base station may broadly cover various names in the following, or may be replaced with the following names: a node B (NodeB), an evolved NodeB (evolved NodeB, eNB), a next generation NodeB (next generation NodeB, gNB), a relay station, a transmitting and receiving point (transmitting and receiving point, TRP), a transmitting point (transmitting point, TP), an access point (access point, AP), a master eNodeB MeNB, a secondary eNodeB SeNB, a multi-standard radio (MSR) node, a home base station, a network controller, an access node, a wireless node, a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that assumes functions of a base station in D2D, V2X, and machine-to-machine (machine-to-machine, M2M) communications, a network-side device in a 6G network, a device that assumes functions of a base station in a future communications system, or the like. The base station may support networks with a same access technology or different access technologies. A specific technology and a specific device form used by the network device are not limited in embodiments of the present application.

The base station may be fixed or mobile. For example, a helicopter or an unmanned aerial vehicle may be configured to serve as a mobile base station, and one or more cells may move according to a location of the mobile base station. In other examples, a helicopter or an unmanned aerial vehicle may be configured to serve as a device in communication with another base station.

In some deployments, the network device in embodiments of the present application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. A scenario in which the network device and the terminal device are located is not limited in embodiments of the present application.

It should be understood that all or some of functions of the communications device in the present application may also be implemented by software functions running on hardware, or by virtualization functions instantiated on a platform (for example, a cloud platform).

For ease of understanding, some related technical knowledge related to embodiments of the present application is first introduced. The following related technologies, as optional solutions, may be randomly combined with the technical solutions of embodiments of the present application, all of which fall within the protection scope of embodiments of the present application. Embodiments of the present application include at least a part of the following content.

With development of the wireless communications technologies, a communications system has increasingly high requirements on a data transmission speed, a quantity of connections, and coverage. For example, a 5G mobile standard requires improvements based on a higher data transmission speed, a larger quantity of connections, and better coverage, to provide data rates of tens of megabits per second for each of tens of thousands of users.

Some wireless communications networks (for example, 5G or subsequent technology evolution) may support operations in extremely high or even extra high frequency (extra high frequency, EHF) bands. These high frequency bands (frequency range, FR) include millimeter wave (mmW) bands. Generally, these frequency bands correspond to wavelengths ranging from 1 mm to 10 mm, or a frequency range ranging from 30 GHz to 300 GHz. For example, a frequency range corresponding to FR2 in a 5G system ranges from 24.25 GHz to 52.6 GHz.

When performing communication, these high frequency bands may support extremely high throughput. However, significant propagation loss that occurs in a high frequency is one of challenges for wireless communication in these extremely high or extra high frequencies. For example, propagation loss may be extremely serious in a millimeter wave band.

To reduce the propagation loss, a beam may be transmitted by using a large-scale antenna array. A large quantity of densely distributed antenna elements improves complexity and costs of digital beamforming, and a communications device generally performs beamforming in an analog domain based on a large-scale antenna array. A beam generated through analog beamforming points to a direction at a specific instant. The communications device performs transmission through beam sweeping. Beam sweeping is also referred to as beam scanning. For example, a network device may transmit data to a terminal device by sweeping a beam set focused in different directions. For another example, a network device may implement system coverage through beam sweeping. However, beam sweeping requires specific time and spatial resources, and relatively high power consumption. That is, generation and sweeping of the beam set are relatively expensive in terms of power consumption, time and spatial resources.

For communication between the network device and the terminal device, when the terminal device is in a coverage of the network device, an optimal transmit-receive beam pair (beam-pair) may be determined through beam pairing for uplink or downlink transmission. For example, in communication performed by the network device and the terminal device based on a Uu communications interface, initial pairing may be performed by using a three-stage initial beam pairing process. The three-stage initial pairing process includes three processes, that is, P1, P2, and P3.

For a terminal device in a sidelink communications system, before performing beam pairing, the terminal device may not know whether there is any other device around the terminal device, or the terminal device does not know a transmission occasion in which different beams are to be transmitted, or the terminal device does not determine to receive a reference signal. Therefore, for the terminal device in the sidelink communications system, how to perform beam pairing based on a sidelink is a problem to be resolved. For example, in FR2, how a sidelink establishes beam pairing to complete subsequent communication is also one of research topics in R18.

To analyze this problem, a communication mode of the sidelink is briefly described with reference to FIG. 1 and FIG. 2.

With development of sidelink communications technologies, a quantity of scenarios in which sidelink communication is applied is increasing. For example, a plurality of V2X scenarios are proposed in NR. These V2X scenarios include vehicle platooning driving, advanced driving, extended sensors, remote driving, and the like.

A sidelink communications technology may involve information exchange between a plurality of types of terminal devices. A V2X communications system 200 shown in FIG. 2 is used as an example. Vehicle-to-vehicle (vehicle-to-vehicle, V2V) communication between a terminal device 201 and a terminal device 202 involves information exchange between the vehicles. Vehicle-to-infrastructure (vehicle-to-infrastructure, V2I) communication, vehicle-to-network (vehicle-to-network, V2N) communication, and vehicle-to-pedestrian (vehicle-to-pedestrian, V2P) communication respectively performed between the terminal device 201 and terminal devices 203 to 205 involve information exchange between the vehicles and an external system.

Gradual expansion of an information exchange range imposes higher requirements on the communications system. For example, the communications system is required to support higher throughput, a lower latency, higher reliability, larger coverage, more flexible resource allocation, and the like. Development of V2X is used as an example. In LTE-V2X, only a broadcast (broadcast) mode is supported between terminal devices for sidelink communication. In NR-V2X, three communication modes, that is, broadcast, groupcast (groupcast), and unicast (unicast), may be supported.

Broadcast is the most basic communication mode in sidelink communication. For a broadcast transmission mode, a terminal device that receives sidelink data may be any terminal device around a terminal device that servers as a transmit end. For example, referring to FIG. 1, it is assumed that the terminal device 125, as a transmit end, broadcasts sidelink data. In this case, any one of the terminal devices 121 to 124 and the terminal devices 126 to 129 around the terminal device 125 may serve as a receive end of the sidelink data.

Groupcast communication is used to support information exchange between terminal devices in a specific group (or referred to as a communication cluster), to assist in negotiation, decision-making, and the like between the terminal devices in the group. Sidelink groupcast has two transmission types. Type 1 is for a managed group (managed group) with a stable connection relationship, which has clear ID information and group member information. Type 2 is for a connectionless group (connectionless group) formed in a connectionless manner, and for example, is dynamically formed groupcast based on a distance, which requires a clear indication of a communication distance for a current service.

For the groupcast transmission manner, sidelink data may be received by all terminal devices in a communication cluster, or may be received by all terminal devices within a specific transmission distance. For example, referring to FIG. 1, for a communication cluster including the terminal devices 127 to 129, when the terminal device 127 transmits sidelink data in a groupcast manner, the other terminal devices 128 and 129 in the communication cluster are receive terminals that receive the sidelink data. For another example, referring to FIG. 1, it is assumed that terminal devices within a preset range include the terminal devices 127 to 129. In this case, when the terminal device 127 transmits sidelink data in a groupcast manner, the other terminal devices 128 and 129 within the preset range are receive terminals that receive the sidelink data.

Unicast communication may implement sidelink communication between two terminal devices. NR-V2X is used as an example. Reliable communication between terminal devices may be implemented based on radio resource control (radio resource control, RRC) signalling through a newly defined PC5 interface.

The foregoing describes a plurality of transmission modes in sidelink communication. On a sidelink that performs communication based on a beam, a terminal device may perform sidelink transmission with another terminal device based on a beam. For example, two terminal devices may communicate with each other by using a transmit beam and a receive beam. With reference to FIG. 3, the following briefly describes beam communication between terminal devices.

Referring to FIG. 3, a terminal device 310 receives data by using three receive beams, and a terminal device 320 transmits data by using three transmit beams. The three transmit beams are respectively TX1, TX2, and TX3, and the three receive beams are respectively RX1, RX2, and RX3.

As shown in FIG. 3, when performing communication based on the beams, the terminal device 310 and the terminal device 320 respectively perform transmit beam sweeping and receive beam sweeping. It may be learned from the foregoing that beam sweeping requires relatively high power consumption and relatively expensive time and spatial resources. Therefore, in a sidelink communications system, a terminal device needs to perform beam pairing based on a sidelink, to establish a related unicast or multicast link with another terminal device. Regardless of whether a unicast link is established, or a groupcast or broadcast link is established, beam pairing cannot be executed only by using a terminal device at a receive end or a terminal device at a transmit end.

As mentioned above, before performing beam pairing, a terminal device on a sidelink may not know another communications device around the terminal device. If the terminal device establishes a transmission link based on beam pairing of a communication request, inefficient utilization of resources may occur. Beam pairing based on a direct communication request (direct communication request, DCR) is used as an example. A terminal device generally transmits a DCR through a PSSCH. A terminal device at a transmit end may need to perform a plurality of times of transmit beam sweeping based on all beams for transmitting a DCR message, to start a process of establishing a unicast link with an expected terminal device at a receive end. If the terminal device at the transmit end must execute a plurality of transmit beam sweeping, transmission of a plurality of PSSCHs is required, to establish a unicast link, which reduces utilization of time-frequency resources.

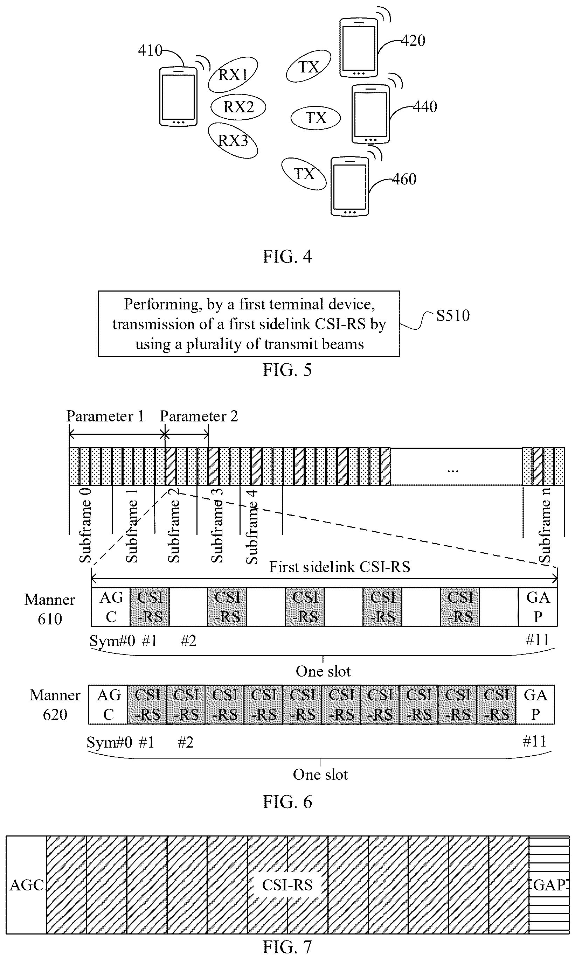

In addition, during beam pairing, the terminal device at the receive end may also face a problem of not being able to determine that a received beam is from which terminal device. That is, the terminal device cannot determine that a plurality of received beams are respectively from which terminal devices. For beam pairing, it is important that the receive end can identify whether a plurality of beams are received from a single transmit end or from a plurality of transmit ends, because the terminal device at the receive end needs to report, to the terminal device at the transmit end, a transmit beam that serves as an optimal beam after measuring a transmit beam. If the terminal device cannot identify where a received beam comes from, the terminal device cannot determine which beam is the optimal beam, or determine a specific quantity of beams that need to be reported as optimal beams, or perform beam pairing based on the received beam. For ease of understanding, the following describes, with reference to FIG. 4, a problem that a terminal device on a sidelink cannot determine a transmit end corresponding to a beam. FIG. 4 is a schematic diagram of performing beam communication by one terminal device at a receive end and a plurality of terminal devices at a transmit end.

Referring to FIG. 4, a terminal device 410 receives data by using three receive beams, and the three receive beams are respectively RX1, RX2, and RX3. There are three terminal devices at a transmit end, which are respectively a terminal device 420, a terminal device 440, and a terminal device 460. As shown in FIG. 4, the three terminal devices at the transmit end may transmit a same signal by using three transmit beams (TX) respectively. For example, the three terminal devices may transmit synchronization signals based on a same synchronization source. In this case, the terminal device 410 cannot identify different terminal devices at the transmit end. The terminal device 410 should respectively transmit report beams to the three terminal devices, but the terminal device 410 may transmit a report beam to only the terminal device 440, and may not report to the terminal device 420 and the terminal device 460.

In conclusion, before a sidelink is established, how a terminal device efficiently performs beam pairing to establish a unicast or multicast link is a problem to be resolved. To implement efficient beam pairing, the following performs in-depth analysis on the foregoing problems and related technologies by using an example in which a unicast link is established.

It may be learned from the foregoing that, before performing beam pairing, a terminal device does not have information related to existence of another terminal device. If the terminal device directly establishes a unicast link based on a communication request, inefficient utilization of resources occurs. Therefore, a process of performing initial beam pairing by the terminal device may be configured. Through the initial beam pairing, the terminal device may establish a unicast link with another terminal device. Without the initial beam pairing process before the establishment of the unicast link, the terminal device may fail to determine an appropriate beam pair for required information exchange, and therefore may fail to ensure a basic communication range.

Further, a reference signal used for the initial beam pairing needs to be configured or pre-configured. A relationship between reference signal transmission and a beam also needs to be configured, and information cannot be exchanged through another channel in the beam pairing process. Therefore, transmission of the reference signal from a transmit terminal to a receive terminal may be similar to a process of a random access channel (random access channel, RACH). To perform the initial beam pairing, the reference signal used for the initial beam pairing further needs to be periodically transmitted by using a configured or pre-configured resource, to implement beam management.

To resolve some of the foregoing problems, an embodiment of the present application proposes a method for sidelink communication. By using this method, a terminal device may perform initial beam pairing based on a sidelink channel state information reference signal (channel state information-reference signal, CSI-RS), so that the terminal device establishes a unicast or multicast link by using paired beams. Compared with using only a DCR or a direct communication accept (direct communication accept, DCA) message to perform beam pairing, using a reference signal such as a CSI-RS does not require that the terminal device should decode a higher layer message used for beam pairing, and a beam pairing process may be executed at a physical (physical, PHY) layer. Compared with other reference signals (for example, a DMRS or a sidelink synchronization signal block (sidelink-synchronisation signal block, S-SSB)), the CSI-RS has the following advantages when being used for beam pairing: flexibility of periodic transmission and improved resource efficiency after transmission with a plurality of beams.

The CSI-RS may be used by a communications device to measure a signal, to obtain channel state information. Generally, depending on a location in time domain, periodic transmission, semi-persistent transmission, or aperiodic transmission may be configured for the CSI-RS. The three configuration manners mainly have the following differences.

Periodic transmission: Configuration and the CSI-RS are transmitted every N slots.

Semi-persistent transmission: A configuration parameter is the same as a configuration parameter of the periodic transmission, but actually whether the CSI-RS is transmitted depends on whether a control information element of a medium access control control element (media access control control element, MAC CE) activates or deactivates the CSI-RS.

Aperiodic transmission: A network device does not configure a period of the CSI-RS, and notifies the terminal device of each transmission of the CSI-RS by using downlink control information (downlink control information, DCI) signalling.

However, in a sidelink communications system, the CSI-RS does not support the configuration manner of periodic transmission. For example, in a current CSI-RS reporting mechanism for a sidelink in R16/R17, a sidelink CSI report for unicast supports only aperiodic transmission of a sidelink CSI-RS, and the CSI-RS is transmitted together with a PSSCH. If transmission of the sidelink CSI-RS is embedded in transmission of the PSSCH, the transmission of the sidelink CSI-RS is restricted by a unicast data traffic pattern. If a sidelink CSI-RS report is in a MAC CE of the PSSCH, transmission needs to be performed according to the configured sidelink CSI-RS report.

It may be learned from the foregoing that there is no periodic CSI-RS transmission in sidelink communication. Therefore, in beam pairing of a sidelink, a beam carrying a CSI-RS is not periodically transmitted, and therefore, beam sweeping used for beam pairing cannot be performed.

To resolve the foregoing problem, an embodiment of the present application proposes a method for sidelink communication. In a beam pairing process, this method supports initial beam pairing based on a sidelink CSI-RS (also referred to as a side link CSI-RS or an SL CSI-RS) through further enhancement. This method may implement periodic transmission of a sidelink CSI-RS by using a first parameter, to facilitate beam sweeping by using the sidelink CSI-RS, thereby completing initial beam pairing based on the sidelink CSI-RS.

It should be noted that the periodic transmission of the sidelink CSI-RS may also be referred to as repeated transmission. A periodic sidelink CSI-RS and/or a repeated sidelink CSI-RS may be further applied to sidelink beam management of beam maintenance. That is, to perform beam sweeping and subsequent beam management based on a CSI-RS, periodic transmission of a sidelink CSI-RS and/or repeated transmission of a sidelink CSI-RS may be introduced. It should be understood that, for beam management of a sidelink, a configuration manner of aperiodic transmission or semi-persistent transmission may still be used. In the configuration manner of semi-persistent transmission, activation or deactivation is performed by using a MAC CE.

For ease of understanding, the following describes in detail a method proposed in an embodiment of the present application with reference to FIG. 5.

Referring to FIG. 5, in step S510, a first terminal device performs transmission of a first sidelink CSI-RS by using a plurality of transmit beams.

The first terminal device is any one of the foregoing terminal devices that perform sidelink communication. For example, the first terminal device may be a car in V2X, or may be a pedestrian in V2X. For another example, the first terminal device may be a transmit terminal on a sidelink, or may be a receive terminal on a sidelink.

The first terminal device may be a communications device that needs to transmit data in sidelink communication. The first terminal device may also be referred to as a source terminal device. The first terminal device may perform unicast communication, groupcast communication, or broadcast communication with another terminal device. In some embodiments, the first terminal device may be a cluster header terminal that initiates groupcast or broadcast communication, or may be a cluster member in groupcast or broadcast communication. For example, in V2X, the first terminal device may be a vehicle that initiates groupcast communication with another vehicle, or may be another vehicle in the groupcast communication.

In some embodiments, the first terminal device may be located within a network coverage range, or may be located outside the network coverage range. When located within the network coverage, the first terminal device may perform sidelink communication based on configuration of a network device.

The first terminal device may be a communications device that supports an antenna array. In some embodiments, the first terminal device may perform analog beamforming based on an antenna array. For example, the first terminal device may generate a transmit beam and transmit a signal to another terminal device through beam sweeping. The transmit beam may also be referred to as a transmission beam. For another example, the first terminal device may generate a receive beam, and receive a signal transmitted by another terminal device through beam sweeping. In some embodiments, the first terminal device may perform wireless communication in a high frequency or an ultra-high frequency. For example, the first terminal device may communicate within a frequency range corresponding to FR2.

That the first terminal device transmits the first sidelink CSI-RS by using the plurality of transmit beams refers to: the first terminal device may respectively generate, in a plurality of instants, the plurality of transmit beams that carry the first sidelink CSI-RS. The plurality of transmit beams may be related to a beam sweeping period and a beam sweeping mode of the first terminal device. For example, if the first terminal device performs coarse sweeping of two beams in an initial phase, the quantity of the plurality of transmit beams may be 2.

The plurality of transmit beams may periodically perform beam sweeping based on a transmission resource corresponding to the first sidelink CSI-RS. In some embodiments, the quantity of the transmit beams may be used to determine a slot location of a sidelink CSI-RS and a synchronization signal burst (burst) within one period. The quantity of the transmit beams may be determined based on a capability of the first terminal device. For terminal devices with different capabilities, quantities of transmit beams are also different. Therefore, a quantity of beams needs to be used to determine a quantity of sidelink CSI-RS transmissions, so that all directions of the beams are covered. For example, the first terminal device may generate a maximum of eight beams, and the quantity of the plurality of transmit beams may be less than or equal to 8.

In some embodiments, for a plurality of directional beams, the first terminal device may independently determine which beam is to be used on each configured (pre-configured) resource. That is, a mapping relationship between the plurality of transmit beams and resources may be configured by the first terminal device. Exemplarily, the plurality of transmit beams may respectively point to different directions. Therefore, the plurality of transmit beams may be beams in a beam set focused in different directions that is generated by the first terminal device.

In some embodiments, the plurality of transmit beams of the first terminal device may be related to a time unit. Exemplarily, time indexes (index) of different sidelink CSI-RSs may correspond to different sidelink beams. The first terminal device may transmit sidelink CSI-RSs on different beams. The first terminal device may also pre-define or pre-configure this time mapping relationship. For example, when the first terminal device transmits a beam based on a slot, a relationship between a transmit beam and a slot index value may be used to determine an optimal transmit beam of the first terminal device. The relationship between a transmit beam and a slot index value refers to a mapping relationship between a transmit beam used by the first terminal device and a corresponding slot index. Therefore, the first terminal device may transmit a sidelink CSI-RS to a terminal device at a receive end in a configured or pre-configured slot.

The first sidelink CSI-RS is a reference signal used for initial beam pairing that is transmitted by the first terminal device by using the plurality of transmit beams. Before establishing a link, the first terminal device transmits CSI-RSs on different beams, which is conductive to identifying a beam to be used by a target terminal device when establishing a link (or transmitting a DCR).

The first sidelink CSI-RS is used by the target terminal device corresponding to the first terminal device to perform initial beam pairing. Beam pairing may also be referred to as beam alignment or beam matching. By executing the initial beam pairing, the first terminal device may establish a unicast or multicast link with the target terminal device, to meet more service requirements or more advanced business case requirements. In some embodiments, the first sidelink CSI-RS may be further used by the first terminal device and the target terminal device to perform beam maintenance.

The target terminal device may be one or more terminal devices with which the first terminal device needs to communicate. The target terminal device may also be one or more devices in a plurality of terminal devices that receive transmit beams transmitted by the first terminal device. In some embodiments, when the target terminal device is one terminal device, the first sidelink CSI-RS is used to establish a beam pair of a unicast link. In some embodiments, when the target terminal device is a plurality of terminal devices, the first sidelink CSI-RS is used to establish a plurality of beam pairs of multicast or groupcast.

The periodic transmission of the first sidelink CSI-RS may implement beam pairing between terminal devices. In some embodiments, a sidelink CSI-RS is periodically transmitted in a manner of beam sweeping, that is, the sidelink CSI-RS is transmitted on different beams in a manner of time division multiplexing. In some embodiments, transmission of a sidelink CSI-RS by using different transmit beams should be limited to a relatively short time period. For example, the periodic transmission may support transmission of an independent sidelink CSI-RS and a plurality of sidelink CSI-RSs within one slot (beam sweeping within the slot). In some embodiments, a periodic sidelink CSI-RS may be used by the target terminal device to identify, select, or determine a corresponding receive beam, thereby establishing sidelink communication with the first terminal device.

A period of periodic transmission of the first sidelink CSI-RS refers to a transmission period of the first sidelink CSI-RS, or may be referred to as a first transmission period. In some embodiments, the first transmission period is related to a transmission period of the plurality of transmit beams.

In some embodiments, the plurality of transmit beams are transmit beams within one beam sweeping period of the first terminal device. Within one beam sweeping period, a set of first sidelink CSI-RSs may be one reference signal burst set (RS burst set). The reference signal burst set may also be referred to as a reference signal burst set. A period of the first sidelink CSI-RS may also be referred to as a transmission period of the reference signal burst set. Exemplarily, when the first terminal device transmits the first sidelink CSI-RS through repetitions of reference signal bursts, the target terminal device may also sweep or train a receive beam of the target terminal device on the plurality of reference signal bursts.

The transmission resource corresponding to the first sidelink CSI-RS is determined based on a first parameter of the periodic transmission. For the plurality of transmit beams for transmitting the first sidelink CSI-RS, the transmission period of the plurality of transmit beams may also be determined based on the first parameter. Configuration of the sidelink CSI-RS may be more flexible by using the first parameter.

The first parameter may refer to one or more parameters related to the periodic transmission. In some embodiments, the first parameter may include the first transmission period of the first sidelink CSI-RS. The first transmission period may be a transmission period of one sidelink CSI-RS, or may be a transmission period of a specified quantity of sidelink CSI-RSs. In the first transmission period, the first terminal device transmits at least one first sidelink CSI-RS.

Exemplarily, the first transmission period may be determined based on a quantity of subframes, or may be determined based on a quantity of slots. For example, the first transmission period may be n subframes.

In some embodiments, the first parameter may further include one or more specific configuration parameters in the first transmission period. Exemplarily, the first terminal device may pre-configure or configure one or more parameters, to indicate a time resource of the first sidelink CSI-RS. For example, the configuration parameter is a time domain offset of a 1st sidelink CSI-RS in the first transmission period relative to a start of the first transmission period, a time domain interval between two adjacent first sidelink CSI-RSs in the first transmission period, or a time resource occupied by at least one first sidelink CSI-RS in the first transmission period.

In some embodiments, the first parameter may include the time domain offset of the 1st sidelink CSI-RS in the first transmission period relative to the start of the first transmission period. The time domain offset may be represented in units of a slot quantity, or may be represented in units of a symbol quantity or a subframe quantity.

Exemplarily, the time domain offset may be represented by a parameter sl-TimeOffset-r18, which is used to indicate an offset of the 1st sidelink CSI-RS in the first transmission period relative to a start position of the period.

In some embodiments, the first parameter may include the time domain interval between two adjacent first sidelink CSI-RSs in the first transmission period. The time domain interval may also be referred to as a time interval. Time intervals between two adjacent first sidelink CSI-RSs in the first transmission period are the same, to implement the periodic transmission of the first sidelink CSI-RS. The time domain interval may be represented in units of a slot quantity, or may be represented in units of a symbol quantity or a subframe quantity.

Exemplarily, the time domain interval between two adjacent sidelink CSI-RSs may be represented by a parameter sl-TimeInterval-r18, which is used to indicate a time interval between two adjacent CSI-RSs in the first transmission period.

In some embodiments, the first parameter may include a time resource occupied by a plurality of first sidelink CSI-RSs in the first transmission period. The time resource occupied by the first sidelink CSI-RSs may be represented by a symbol quantity. In the first transmission period, time resources occupied by any two first sidelink CSI-RSs in the plurality of first sidelink CSI-RSs may be the same or different from each other. For example, in any two slots in the first transmission period, quantities of symbols occupied by the first sidelink CSI-RSs may be the same or different from each other, or may change in a manner of increasing or decreasing progressively. For another example, when being transmitted based on a slot, the first sidelink CSI-RSs may be transmitted in a manner in which a slot alternates with a blank frame, or may be consecutively transmitted, or may be transmitted by setting a quantity of symbols to be occupied.

Exemplarily, the quantities of the symbols occupied by the first sidelink CSI-RSs may be represented by a parameter sl-Numbersymbol-r18. This parameter may further indicate a slot location at which each sidelink CSI-RS is transmitted.

Exemplarily, a length of the first transmission period may be related to or may not be related to a time resource occupied by the first sidelink CSI-RSs. For example, the length of the first transmission period is related to the quantities of the symbols occupied by the first sidelink CSI-RSs, and transmission resources of the first sidelink CSI-RSs may be ensured. If the first transmission period is set to be relatively short, the quantities of the symbols occupied by the first sidelink CSI-RSs are large. If the first transmission period is set to be relatively long, the quantities of the symbols occupied by the first sidelink CSI-RSs are small. For another example, the first transmission period may be a fixed value, and is not related to the time resource occupied by the first sidelink CSI-RSs.

In some embodiments, the first parameter may include the plurality of parameters described above. For example, the first parameter may include a time domain offset of a 1st sidelink CSI-RS in the first transmission period relative to a start of the first transmission period and a time domain interval between two adjacent first sidelink CSI-RSs. For another example, the first parameter may include a time domain offset of a 1st sidelink CSI-RS in the first transmission period relative to a start of the first transmission period and a time resource occupied by a plurality of first sidelink CSI-RSs.

For ease of understanding, with reference to FIG. 6, the following exemplarily describes a first transmission period of a first sidelink CSI-RS by using an example in which a subcarrier spacing (subcarrier spacing, SCS) is 60 kHz.

As shown in FIG. 6, the first transmission period includes n+1 subframes, which are respectively subframe 0 to subframe n. Each subframe includes four slots. Each slot includes 12 symbols (symbol), which are respectively sym#0 to sym#11. Each slot corresponds to one first sidelink CSI-RS. A time resource occupied by a first sidelink CSI-RS in each slot is represented by a symbol quantity.

Referring to FIG. 6, a transmission resource used for transmitting a first sidelink CSI-RS is configured by using a parameter 1 and a parameter 2. The parameter 1 is a time domain offset, which is nine slots. The parameter 2 is a time domain interval between two adjacent first sidelink CSI-RSs, which is one subframe, that is, four slots.

Still referring to FIG. 6, a slot corresponding to a first sidelink CSI-RS has two structural examples, that is, manner 610 and manner 620. In manner 610 and manner 620, the first sidelink CSI-RS is independently transmitted, and only a CSI-RS, automatic gain control (automatic gain control, AGC), and a guard period (GAP) are transmitted in the slot. In a slot structure of manner 610, CSI-RSs are transmitted at intervals of one symbol, and a quantity of symbols occupied by the first sidelink CSI-RS is 5. In a slot structure of manner 620, a CSI-RS is consecutively transmitted, and a quantity of symbols occupied by the first sidelink CSI-RS is 10.

As mentioned above, a set of first sidelink CSI-RSs may be a reference signal burst set. For example, at least one first sidelink CSI-RS in the first transmission period corresponds to a first reference signal burst set. The first reference signal burst set may be used to determine a first index related to each sidelink CSI-RS in the first transmission period.

In some embodiments, in a case in which beamforming is performed based on a CSI-RS, a quantity of beams transmitted in a given reference signal burst set will depend on a total quantity of beams supported by the first terminal device. In some embodiments, other signals or channels, such as control signals or PSFCH feedback, may also be allowed to be multiplexed in the reference signal burst set.

In some embodiments, the first index related to each sidelink CSI-RS may be a time index, which is used to indicate time resource configuration information of each sidelink CSI-RS. It should be understood that the first index may also be a frequency domain index, which is not limited herein.

Exemplarily, the first index may include an index corresponding to each sidelink CSI-RS in the first reference signal burst set. For example, a time index of each sidelink CSI-RS may be set in the first reference signal burst set.

Exemplarily, the first index may include an index corresponding to each reference signal burst in the first reference signal burst set. For example, the index of each sidelink CSI-RS may be set in a specific reference signal burst set.

Exemplarily, the first index may include an index corresponding to each sidelink CSI-RS in a reference signal burst of the first reference signal burst set. The reference signal may be any reference signal burst in the first reference signal burst set. For example, a time index of each sidelink CSI-RS in a specific reference signal burst may be set.

In some embodiments, the first index may be indicated in one or more manners. Exemplarily, the first index may be indicated by using sidelink control information (sidelink control information, SCI) transmitted together with the first sidelink CSI-RS. That is, when the SCI is transmitted together with the first sidelink CSI-RS, a related index of the first sidelink CSI-RS may be clearly indicated in the SCI. Exemplarily, the first index may be indicated by using a plurality of bits carried in the first sidelink CSI-RS. For example, the first sidelink CSI-RS may carry two or three bits to indicate a related index. Exemplarily, the first index may be carried in both the first sidelink CSI-RS and the SCI. For example, the SCI may carry information at a high order bit, and the CSI-RS may carry information at a low order bit, to jointly indicate the index.

With reference to FIG. 5 and FIG. 6, the foregoing describes a method for periodic transmission of a first sidelink CSI-RS by a first terminal device based on a first parameter. By using the first parameter, the following problems to be considered in design of a sidelink CSI-RS are resolved: periodic transmission, a quantity of occupied symbols, whether to map across a slot boundary or across a symbol in a slot set, and how to arrange, in one burst set, a quantity of slots for beam sweeping of a CSI-RS in each burst or burst set.

A plurality of transmit beams for transmitting a first sidelink CSI-RS may be used by a target terminal device corresponding to the first terminal device to perform initial beam pairing. A primary objective of the initial beam pairing is to determine a transmit-receive beam pair between terminal devices. Because a slot structure of related sidelink communication does not support periodic transmission of a CSI-RS, supporting beam sweeping in a slot and/or supporting only CSI-RS transmission will change a resource or slot structure of a sidelink. Therefore, introduction of periodic transmission of a sidelink CSI-RS and/or repeated transmission of a sidelink CSI-RS will cause problems related to a higher layer signalling structure.

Based on this, an embodiment of the present application further provides a method for performing initial beam pairing based on a sidelink CSI-RS. In this method, a manner of transmitting a first sidelink CSI-RS is set, to resolve a problem of whether the first sidelink CSI-RS is located in a same slot as SCI. In this method, the first sidelink CSI-RS may be separately transmitted, or may not be independently transmitted.

In some embodiments, the manner of transmitting the first sidelink CSI-RS may include: the first sidelink CSI-RS is not transmitted together with a sidelink shared channel. This transmission manner may also be referred to as separate transmission or independent transmission. Because the initial beam pairing is determined based on an independently transmitted first sidelink CSI-RS, a plurality of times of beam sweeping based on transmission of a DCR message or a payload may be avoided. Instead, a DCR message or a payload is transmitted only on paired beams, thereby improving resource utilization.

Exemplarily, independent transmission of a sidelink CSI-RS means that at least no extra sidelink data is transmitted in a same slot. The sidelink data is, for example, a service data unit (service data unit, SDU) of medium access control (media access control, MAC) of a sidelink. To perform the initial beam pairing by using the first sidelink CSI-RS, a slot structure for transmitting the first sidelink CSI-RS needs to be designed. For ease of understanding, the following describes several possible slot structures for separately transmitting a first sidelink CSI-RS with reference to FIG. 7 to FIG. 10.

It should be noted that a slot structure for transmitting a first sidelink CSI-RS needs to include an AGC symbol, to support beam sweeping and reporting based on a sidelink CSI-RS. For initial beam pairing in which a sidelink CSI-RS is used, if there is no AGC symbol, when executing receive beam sweeping, a non-target terminal device (not a terminal device that performs beam measurement) around a first terminal device changes receive power. These AGC problems will affect resource sensing or data receiving performed by a sidelink terminal device.

In an implementation, a slot structure corresponding to independent transmission of a first sidelink CSI-RS may include symbols for a CSI-RS, AGC, and a GAP that are to be transmitted. As shown in FIG. 7, a slot for performing beam sweeping based on a first sidelink CSI-RS includes 14 symbols, a first symbol is used to transmit AGC, and a last symbol is used to transmit a GAP. A second symbol to a thirteenth symbol in the slot are used to transmit a sidelink CSI-RS. A structure of a symbol occupied by the sidelink CSI-RS may be that in manner 610 or manner 620 in FIG. 6, or another manner.

In an implementation, the slot structure corresponding to independent transmission of a first sidelink CSI-RS may include symbols for a CSI-RS, AGC, a GAP, and SCI that are to be transmitted. The SCI may be first stage SCI corresponding to a PSCCH. In this case, the SCI may also carry information about resource allocation, and the first sidelink CSI-RS may be multiplexed with the first stage SCI.

As an example, the SCI may indicate a related index of the first sidelink CSI-RS. To avoid mutual interference with another user, the SCI information may further indicate identification information of the first terminal device and/or a target terminal device. For example, the SCI information may include source identity (identity, ID) information of a terminal device at a transmit end and destination ID information of a terminal device at a receive end. By using this information, the terminal device at the receive end can identify a terminal device that transmits a signal.

As an example, the first terminal device may know the identification information of the target terminal device in advance. For example, a DCR message may be broadcast or unicast. In a case in which the DCR is unicast, an ID (used for establishing a unicast link) of the target terminal device is known by the first terminal device in advance.

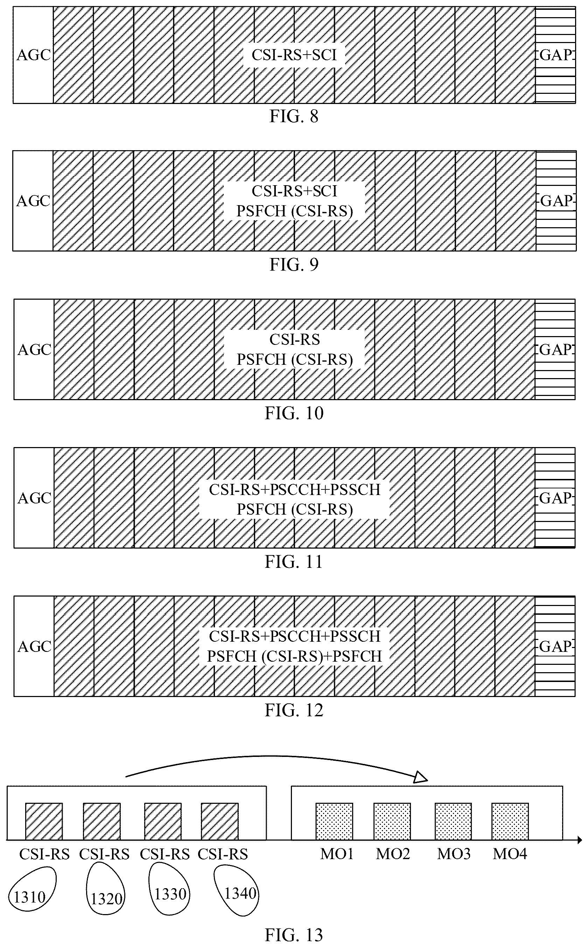

As shown in FIG. 8, a slot for performing beam sweeping based on a first sidelink CSI-RS includes 14 symbols, where a first symbol is used to transmit AGC and a last symbol is used to transmit a GAP. A second symbol to a thirteenth symbol in the slot are used to transmit a sidelink CSI-RS and SCI. The SCI may be located before or after the CSI-RS.

In an implementation, the slot structure corresponding to independent transmission of the first sidelink CSI-RS may include symbols for a CSI-RS, AGC, a GAP, SCI and a PSFCH corresponding to the CSI-RS that are to be transmitted. The SCI may be first stage SCI corresponding to a PSCCH. A PSFCH (for CSI-RS) may only be used by the terminal device at the receive end to feed back on the CSI-RS. As shown in FIG. 9, a slot for performing beam sweeping based on a first sidelink CSI-RS includes 14 symbols, where a first symbol is used to transmit AGC and a last symbol is used to transmit a GAP. A second symbol to a thirteenth symbol in the slot are used to transmit a sidelink CSI-RS, SCI, and a PSFCH. The PSFCH may occupy one or more symbols before the GAP.

In an implementation, the slot structure corresponding to independent transmission of the first sidelink CSI-RS may include symbols for a CSI-RS, AGC, a GAP and a PSFCH corresponding to the CSI-RS that are to be transmitted. The PSFCH may only be used by the terminal device at the receive end to feed back on the CSI-RS. As shown in FIG. 10, a slot for performing beam sweeping based on a first sidelink CSI-RS includes 14 symbols, where a first symbol is used to transmit AGC and a last symbol is used to transmit a GAP. A second symbol to a thirteenth symbol in the slot are used to transmit a sidelink CSI-RS and a PSFCH. The PSFCH may occupy one or more symbols before the GAP.

In an implementation, when the first sidelink CSI-RS is independently transmitted, the first sidelink CSI-RS may also be transmitted together with a sidelink primary synchronization signal (sidelink-primary synchronization signal, S-PSS) and/or a sidelink secondary synchronization signal (sidelink-secondary synchronization signal, S-SSS) in a synchronization signal block. For example, the slot structure may include symbols for a CSI-RS, an S-PSS, an S-SSS, AGC, and a GAP that are to be transmitted. The S-PSS and/or the S-SSS may be further used to indicate the identification information of the first terminal device and/or the target terminal device.

In an implementation, when the first sidelink CSI-RS is independently transmitted, a quantity of symbols occupied by the AGC or the GAP in the slot structure is variable. The AGC and/or the GAP may determine, based on other transmission content, whether to occupy a plurality of symbols. For example, a quantity of symbols occupied by the AGC and the GAP may be determined based on a quantity of symbols occupied by the CSI-RS, the SCI, and the PSFCH.

Exemplarily, when the first sidelink CSI-RS is independently transmitted, a transmission resource corresponding to the first sidelink CSI-RS is further used to transmit first information. The first information may include identification information of the first terminal device and/or the target terminal device, which facilitates identification by the terminal device at the receive end. Exemplarily, the first information may be transmitted by using one or more of the following: SCI, an S-PSS, and/or an S-SSS.

Exemplarily, when the first sidelink CSI-RS is independently transmitted, a beam reporting resource related to a transmit beam of the sidelink CSI-RS may be configured (pre-configured) and/or defined (pre-defined). The configuration may include configuration of a transmitted beam and a resource of beam feedback (from the target terminal device). Time indexes related to these resources may be explicitly or implicitly indexed in a CSI-RS.

In some embodiments, a manner of transmitting the first sidelink CSI-RS may include: the first sidelink CSI-RS is transmitted together with a sidelink shared channel. This transmission manner may also be referred to as non-independent transmission.

Exemplarily, when the first sidelink CSI-RS is not independently transmitted, transmission of a plurality of PSCCHs or PSSCHs that include a plurality of sidelink CSI-RS symbols are inserted into a current slot structure, to implement initial beam pairing. A slot structure used for beam pairing may be the same as a slot structure used for subsequent beam maintenance, and no further adjustment is required. In other words, when the first sidelink CSI-RS is transmitted together with a sidelink shared channel, although addition of data in beam sweeping cause resource waste to some extent, a unified frame structure also brings a great benefit. For ease of understanding, the following describes several possible slot structures for not transmitting the first sidelink CSI-RS independently with reference to FIG. 11 and FIG. 12.

In an implementation, in addition to a CSI-RS, AGC, and a GAP, and a PSFCH corresponding to the CSI-RS shown in FIG. 10, a slot structure corresponding to non-independent transmission of a first sidelink CSI-RS may further include symbols for a PSCCH and a PSSCH. As shown in FIG. 11, a slot for performing beam sweeping based on a first sidelink CSI-RS includes 14 symbols, where a first symbol is used to transmit AGC and a last symbol is used to transmit a GAP. A second symbol to a thirteenth symbol in the slot are used to transmit a sidelink CSI-RS, a PSCCH, a PSSCH, and a PSFCH. The PSFCH is only for a CSI-RS beam feedback signal.

In an implementation, in addition to a signal or channel shown in FIG. 11, the slot structure corresponding to non-independent transmission of the first sidelink CSI-RS may further include symbols for a PSFCH for a PSSCH. As shown in FIG. 12, a slot for performing beam sweeping based on a first sidelink CSI-RS includes 14 symbols, where a first symbol is used to transmit AGC and a last symbol is used to transmit a GAP. A second symbol to a thirteenth symbol in the slot are used to transmit a sidelink CSI-RS, a PSCCH, a PSSCH, and a plurality of PSFCHs. These PSFCHs include both a PSFCH for PSSCH feedback and a PSFCH for a CSI-RS beam feedback signal.

Exemplarily, a transmission resource corresponding to the first sidelink CSI-RS is further used to transmit first information, where the first information includes identification information of the first terminal device and/or the target terminal device. The first information may be carried in first stage SCI corresponding to a PSCCH and/or second stage SCI corresponding to a PSSCH. For example, in a case in which the first sidelink CSI-RS is transmitted together with a PSSCH, SCI in a PSCCH or the PSSCH may further carry information about resource allocation, and the CSI-RS may be multiplexed with first stage SCI, or may be multiplexed with both first stage SCI and second stage SCI.

With reference to FIG. 7 to FIG. 12, the foregoing describes in detail a slot structure for performing initial beam pairing based on a first sidelink CSI-RS. By using different slot structures, a periodic reference signal based on a CSI-RS may be transmitted, to determine a transmit-receive beam pair between terminal devices by using initial beam pairing of a sidelink.

It may be learned from the foregoing that, first information used for identification of a terminal device is transmitted by using SCI or a synchronization signal, which may resolve the following problem: a terminal device at a receive end cannot identify whether the terminal device is a target terminal device in an initial beam pairing process. By using the first information, specific information of a first terminal device may be included in each transmit beam, so that the terminal device at the receive end can identify a beam from one or more terminal devices at a transmit end, and determine, based on a beam training result, which transmit or receive beams are to be used for communication between terminal devices. By using the first information, specific information of the target terminal device may also be included in each transmit beam, so that a terminal device at the receive end can determine whether the terminal device belongs to the target terminal device.

In some embodiments, the first information may be identification information of a terminal device, or may be indication information about beam pairing. Exemplarily, the identification information of the terminal device may include identification information of the first terminal device and/or identification information of the target terminal device. Exemplarily, SCI transmitted together with the first sidelink CSI-RS may also carry the indication information about beam pairing, where the indication information is, for example, information such as a type or a location of a terminal device with which the first terminal device needs to perform beam pairing.

As mentioned above, before the first terminal device performs initial beam pairing or in an initial beam pairing process, a related resource of beam pairing needs to be configured or pre-configured. For example, for a sidelink, a terminal device needs to determine a transmission resource and a receiving resource in advance. For another example, in Rel-16 or Rel-17, a sidelink is configured for a sidelink CSI-RS resource and a sidelink CSI report by using PC5-RRC. This sidelink is available only after a link is established. Therefore, for a terminal device without PC5-RRC configuration in initial beam pairing, resources to be used for transmit beams and receive beams are unknown. The terminal device cannot obtain a mapping between a transmission resource of a sidelink CSI-RS and beam-related information, a beam sweeping resource of a sidelink CSI-RS, an associated beam reporting resource, and periodicity. The information all needs to be preset or pre-configured.

In some embodiments, the first terminal device needs to configure (pre-configure) information about a reference signal used for initial beam pairing. A relationship between reference signal transmission and a beam is also the same.

In some embodiments, the first terminal device further needs to perform first configuration on the first parameter. The first configuration may be pre-configured or configured in real time.

In some embodiments, the first configuration may be further used to indicate one or more of the following information: a mapping relationship between a plurality of transmit beams and a transmission resource corresponding to the first sidelink CSI-RS, a resource of a CSI report related to the first sidelink CSI-RS, or a resource of a plurality of beam response signals or reports that are in a one-to-one correspondence with the plurality of transmit beams.

Exemplarily, the first configuration may be used to indicate the mapping relationship between the plurality of transmit beams and the transmission resource corresponding to the first sidelink CSI-RS. The mapping relationship may include a mapping between a transmit beam of the first terminal device and a slot index, or may be used to determine a mapping between a receive beam of the first terminal device and a slot index.

In an implementation, an optimal transmit beam of the first terminal device may be determined based on a relationship between a transmit beam and a slot index value. Because different CSI-RS time indexes actually correspond to different downlink beams, the first terminal device may transmit CSI-RS bursts on different beams. When the first terminal device pre-defines or pre-configures the mapping relationship between a transmit beam and a slot index by using the first configuration, this time mapping information may cause the first terminal device to transmit a CSI-RS to the target terminal device in a configured (pre-configured) slot.

In another implementation, there may be a mapping between a transmit beam used by the first terminal device and a corresponding slot index, and there may also be a similar mapping between a corresponding receive beam (in a case of beam correspondence) at the first terminal device and a corresponding slot index. The first configuration may be used to indicate these mapping relationships and cause the target terminal device to obtain the information. When receiving a beam reference signal transmitted by the first terminal device, the target terminal device may determine a preferred transmit beam from the first terminal device. For example, when a beam correspondence relationship is established, the target terminal device may determine the preferred transmit beam of the first terminal device.

In still another implementation, the target terminal device may further determine the preferred transmit beam from the first terminal device based on a signal received by the target terminal device, and therefore determine a preferred receive beam at the first terminal device. For example, the target terminal device may determine, based on a mapping between a receive beam at the first terminal device and a slot index that is pre-defined or preset by using the first configuration, a slot index to be used to transmit a beam to the first terminal device. For another example, when the target terminal device wants to establish a link with the first terminal device, the target terminal device may transmit a link establishment message by using a beam for a slot index corresponding to a receive beam of the first terminal device.

Exemplarily, the first configuration may be used to indicate a resource of a CSI report related to the first sidelink CSI-RS, so that the target terminal device may use a corresponding beam report to indicate a preferred transmit beam or a preferred receive beam after executing beam measurement. In Rel-16 or Rel-17, transmission resources used for a sidelink CSI-RS are dynamically selected, and for initial beam sweeping, the terminal device at the receive end does not know these resources in advance. For example, the terminal device at the receive end may not know where to receive a signal and when a sidelink CSI-RS beam sweeping process is completed. In addition, for conventional sidelink CSI-RS schemes and sidelink CSI reporting schemes, a sidelink is configured by using PC5-RRC. This sidelink is available only after a link is established. Further, when the terminal device at the receive end performs CSI reporting by using a MAC CE, there is no mapping between resources used for transmitting CSI-RSs and respective CSI reports. Therefore, the first terminal device does not know when to receive a report and which beam is to be used to receive the report. That is, the first terminal device may not be able to determine a receive beam and a resource on which the report is received. Each transmit beam needs a corresponding receive beam. This problem may be resolved by configuring a corresponding receive beam by using the first configuration by indicating a resource of a CSI report corresponding to a transmit beam. By using the first configuration, the target terminal device does not need to decode all information, and may know whether the first terminal device is in a communication range of the target terminal device by decoding only information about a CSI-RS and information about a PSSCH.

Exemplarily, the first configuration may be used to indicate the resource of the plurality of beam response signals or reports that are in the one-to-one correspondence with the plurality of transmit beams, to determine an optimal beam pair between terminal devices. The beam response signal is beam feedback determined by the target terminal device based on receive beam sweeping. The following provides specific descriptions with reference to a first beam pair. The beam response report may be a CSI report, or may be another report related to a beam response. A resource for transmitting a beam response signal or report may also be referred to as a transmission occasion (MO) of the beam response signal or report. For example, the target terminal device may determine, based on a measurement result, a related resource of a selected sidelink CSI-RS, to transmit a response or acknowledgement message. This message is used to indicate a beam that has been selected by the target terminal device, thereby establishing an association mapping relationship between an index of a CSI-RS and a beam reporting resource.

As an example, when the first configuration is used to indicate the resource of the plurality of beam response signals or reports that are in the one-to-one correspondence with the plurality of transmit beams, the beam response signals or reports may be transmitted by using one or more of the following: a MAC CE or a PSFCH.

For example, if a beam report is carried in a MAC CE, this association may be implemented through resource selection in the first terminal device, and the first terminal device may set this association in resource reservation information.

For another example, if a beam report is carried in a PSFCH, the first terminal device may reserve a beam feedback resource and a beam feedback occasion of the PSFCH in a reserved resource pool.

For ease of understanding, the following describes, with reference to FIG. 13, a plurality of beam response transmission occasions that are in a one-to-one correspondence with a plurality of transmit beams by using a transmission occasion of a beam response signal or report as an example.

Referring to FIG. 13, a first terminal device periodically transmits a CSI-RS by using four transmit beams. The four transmit beams are respectively a beam 1310 (beam0), a beam 1320 (beam1), a beam 1330 (beam2), and a beam 1340 (beam3). First configuration may be used to indicate transmission occasions of four beam response signals or reports that are in a one-to-one correspondence with the four transmit beams. That is, CSI-RSs and MOs are also mapped one to one, and each CSI-RS corresponds to one MO. The four transmission occasions are respectively MO1, MO2, MO3, and MO4. As shown in FIG. 13, the transmission occasion MO1 corresponds to the beam 1310, the transmission occasion MO2 corresponds to the beam 1320, the transmission occasion MO3 corresponds to the beam 1330, and the transmission occasion MO4 corresponds to the beam 1340.

Based on a mapping relationship shown in FIG. 13, after receiving a beam response report in MO2, the first terminal device may identify that an optimal transmit beam expected by a target terminal device is the beam 1320. Then, based on a determined transmit beam and a determined receive beam, the first terminal device and the target terminal device may establish a unicast link according to a related link establishment process.

With reference to FIG. 13, the foregoing describes the first information used for identification and the first configuration about a beam pairing resource, to implement beam pairing between the first terminal device and the target terminal device. After performing identification by using the first information, the target terminal device may determine an optimal transmit beam of the first terminal device, and transmit a beam response signal or report to the first terminal device by using a resource of the first configuration, to determine that a first beam pair for establishing communication between the target terminal device and the first terminal device.

In some embodiments, the target terminal device may include a second terminal device. The second terminal device is a terminal device with which the first terminal device needs to communicate. The second terminal device may determine a beam response signal or report based on signal quality of one or more received transmit beams, and the beam response signal or report may be used by the first terminal device and the second terminal device to determine the first beam pair. The first beam pair may be used by the first terminal device and the second terminal device to perform sidelink communication.

In a possible implementation, the signal quality may include reference signal received power (reference signal receiving power, RSRP), reference signal received quality (reference signal receiving quality, RSRQ), or another parameter that may reflect transmission quality of a CSI-RS.

Exemplarily, the second terminal device may transmit a beam response signal or report based on measurement of RSRP. The second terminal device may measure an RSRP value of each transmit beam from the first terminal device, to determine an RSRP measurement result of each transmitted CSI-RS. For example, in the first beam pair, a beam with highest measurement RSRP may be determined as a receive beam of the second terminal device, and a corresponding transmit beam is determined as a transmit beam of the first terminal device.

Exemplarily, as an example, the second terminal device sets a quantity of beams that may be reported. The second terminal device may directly report an RSRP value, or may report a difference between RSRP of a beam and RSRP of a strongest beam. For example, the second terminal device may report, based on the set quantity of beams, a largest RSRP value or several largest RSRP values. For another example, the second terminal device may report a difference between RSRP of a remaining beam and the RSRP of the strongest beam.

In a case in which the second terminal device transmits a beam response signal, the beam response signal may indicate existence of the second terminal device and a preferred beam based on only a resource of signal detection, and therefore, the beam response signal may not carry a payload. Exemplarily, the beam response signal may be similar to a physical random access channel (physical random-access channel, PRACH) in a Uu interface. Exemplarily, the beam response signal may be a reference signal. For example, the beam response signal may be a feedback signal of a PSFCH dedicated to a reference signal CSI-RS.

In some embodiments, a plurality of transmission occasions used to transmit beam response signals may be represented by symbols within a slot structure. Exemplarily, a time resource corresponding to each transmission occasion in the plurality of transmission occasions may be a symbol corresponding to AGC, or may be one or more symbols adjacent to AGC. The one or more symbols adjacent to AGC are, for example, a dedicated symbol added after AGC. That is, in the slot structure, the second terminal device may use an AGC symbol or add dedicated symbol information after AGC as a time resource used for a beam response signal.

In some embodiments, a beam response signal transmitted by the second terminal device may indicate one or more of the following information: identification information of the second terminal device, identification information of the first terminal device, an identifier of a transmit beam and/or a receive beam corresponding to the beam response signal, or information about association between a transmit beam and/or a receive beam corresponding to the beam response signal and a time resource. The information about the association between the transmit beam and/or the receive beam and the time resource is, for example, a mapping relationship between the transmit beam and/or the receive beam and a slot index.

Exemplarily, for a beam response signal, the first terminal device may determine an indicated transmit beam based on the foregoing defined (pre-defined) mapping rule between a resource for transmitting a CSI-RS and a reporting resource. For example, for the second terminal device, if a beam for transmitting the CSI-RS is an optimal beam based on an L1-RSRP measurement result of the CSI-RS, a beam report may be transmitted in a reporting occasion corresponding to the transmit beam after the first terminal device completes transmission of the CSI-RS by using all beams in one period. The beam report may be completed by using a beam response signal.

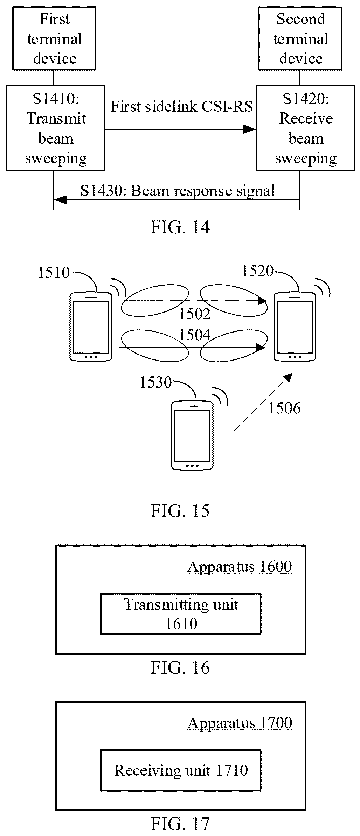

For ease of understanding, the following briefly describes a possible implementation according to an embodiment of the present application with reference to FIG. 14. FIG. 14 is described from a perspective of interaction between a first terminal device and a second terminal device. The second terminal device is a target terminal device of a transmit beam of the first terminal device.

Referring to FIG. 14, in step S1410, the first terminal device performs transmit beam sweeping. In the transmit beam sweeping, a first sidelink CSI-RS of the first terminal device is transmitted by using a plurality of transmit beams.

In step S1420, the second terminal device performs receive beam sweeping. The receive beam sweeping may be used by the second terminal device to measure the plurality of transmit beams.

In step S1430, the second terminal device transmits a beam response signal to the first terminal device. The beam response signal may be transmitted in a transmission occasion corresponding to an optimal transmit beam selected by the second terminal device. The first terminal device may determine, based on a transmission occasion of the beam response signal, a transmit beam selected by the second terminal device, to establish a first beam pair.

With reference to FIG. 14, the foregoing describes a process in which the first terminal device and the second terminal device perform beam pairing based on the beam response signal. The second terminal device may determine the optimal transmit beam based on a measurement result of signal quality, to determine the first beam pair. However, there may be a potential resource conflict on a sidelink communication resource occupied by the first beam pair.

To resolve this problem, a terminal device may sense resources to determine whether there is a conflict. If the first terminal device determines that there is an expected or potential resource conflict on a resource occupied by the optimal first beam pair, the first terminal device may select a sub-optimal beam pair reported by the second terminal device to establish a connection, or may select another resource for transmission of the first beam pair. For example, the second terminal device may report a plurality of measurement results with strongest RSRP or second strongest RSRP. For the plurality of measurement results, the first terminal device may select a proper beam pair or a proper resource according to a resource conflict situation, to avoid a potential resource conflict.

In some embodiments, the first terminal device may request the target terminal device to perform resource sensing, to determine whether there is a resource conflict. Exemplarily, the first terminal device may reduce potential resource conflicts by transmitting second information. The second information may instruct the target terminal device to perform resource sensing according to a received transmit beam and/or a receive beam corresponding to a received transmit beam. The resource sensing may be used to display whether there is a resource conflict between a resource corresponding to a transmit or receive beam and another resource requirement, or may display whether a resource corresponding to a transmit or receive beam is a preferred or non-preferred resource.

As an example, the second information may be one or more IUC requests based on an inter-UE coordination (inter-UE coordination, IUC) mechanism, so that terminal devices exchange preferred or non-preferred resources. However, directionality of a transmit beam, a receive beam, or sensing is not considered in the relevant IUC mechanism. The relevant IUC request cannot indicate a beam for which IUC information is requested. Further, legacy IUC information cannot indicate a beam with which a preferred or non-preferred resource in the IUC information is associated. To resolve this problem, when the second information is an IUC request, information used to indicate a transmit or receive beam associated with a preferred or non-preferred resource needs to be added in the IUC information. In this case, the second information may instruct a terminal device to perform resource sensing according to an association relationship between a transmit or receive beam and a resource. For example, when the target terminal device performs resource sensing according to a transmit beam, the target terminal device may sense whether a resource corresponding to the transmit beam has resource configuration that causes an expected or potential resource conflict.

In some embodiments, when the target terminal device includes the second terminal device, the first terminal device may determine, based on one or more beam response signals or reports, a plurality of beam pairs for communicating with the second terminal device, or a plurality of resources for communicating with the second terminal device. The plurality of resources may include a preferred resource and a non-preferred resource.

In some embodiments, when the target terminal device includes the second terminal device, the second terminal device may perform resource sensing based on the second information, and transmit a sensing result to the first terminal device. The sensing result may be used by the first terminal device to determine a beam pair or a resource for performing sidelink communication with the second terminal device.

Exemplarily, the first terminal device and the second terminal device may determine a plurality of beam pairs based on the first sidelink CSI-RS. The plurality of beam pairs are more than one beam pair determined based on the first sidelink CSI-RS. In the plurality of beam pairs, the first beam pair and a second beam pair may be determined based on signal strength. The first beam pair may be an optimal beam pair, and the second beam pair may be a sub-optimal beam pair. The signal strength may be obtained by measuring a beam in a beam pair by a terminal device. The signal strength is, for example, a parameter that indicates signal quality, such as RSRP or RSRQ. In this case, the first terminal device may determine, based on the sensing result of the second terminal device, a beam pair or a resource for performing communication.

In an implementation, if the sensing result of the second terminal device shows that it is determined that there is a resource conflict on the first resource related to the first beam pair, the first terminal device may perform sidelink communication with the second terminal device by using the second beam pair.

In another implementation, the sensing result of the second terminal device may include a resource of the first beam pair. The resource of the first beam pair includes a preferred first resource and a non-preferred second resource. If the sensing result of the second terminal device shows that there is a resource conflict on the first resource, the first terminal device may transmit or receive a beam by using the non-preferred second resource.

It should be noted that for the second terminal device, the second terminal device may also determine, based on the sensing result, a beam pair for communicating with the first terminal device or a resource corresponding to a transmit or receive beam. Details are not described herein again.

In some embodiments, the first terminal device may also perform resource sensing, and determine, based on all or some of sensing results, a beam pair or a resource for communicating with the target terminal device.

For ease of understanding, the following describes a method for performing resource sensing by a terminal device in FIG. 15 by using a unicast link as an example.

Referring to FIG. 15, there is a unicast link between a terminal device 1510 and a terminal device 1520. The terminal device 1510 may be a first terminal device, and the terminal device 1520 may be a second terminal device. Between the two terminal devices, there are two candidate beam pairs used for unicast communication, which are respectively a beam pair 1502 and a beam pair 1504.

After receiving an IUC request from the terminal device 1510, the terminal device 1520 may notify the terminal device 1510 of a preferred or non-preferred resource. As shown in FIG. 15, the terminal device 1520 senses sidelink transmission 1506 from the terminal device 1530. The sidelink transmission 1506 is sensed by using the beam pair 1504 instead of the beam pair 1502. According to the IUC request, the terminal device 1520 may notify the terminal device 1510 of a preferred or non-preferred resource based on a sensing result of the beam pair 1504 and/or an expected or potential resource conflict.

For the terminal device 1510, after receiving the notification from the terminal device 1520, if the terminal device 1510 discovers a potential conflict on a resource occupied by an optimal beam pair, the terminal device 1510 may select a sub-optimal resource for transmission or select a sub-optimal beam pair. As shown in FIG. 15, after sensing the transmission from the terminal device 1530 by using the beam pair 1504, the terminal device 1520 transmits a sensing result to the terminal device 1510. The terminal device 1510 may select, according to the sensing result, the beam pair 1502 to perform sidelink communication with the terminal device 1520, even if the beam pair 1504 is the optimal beam pair.

With reference to FIG. 13 to FIG. 15, the foregoing describes a case in which a terminal device establishes a unicast link through beam pairing. For a plurality of unicast links in a multicast link, beam pairing may be performed by referring to the foregoing method. However, a multicast link is further faced with more complex problems. For example, in a case of establishing a plurality of unicast links of a multicast link, how to avoid a conflict between feedback of a plurality of target terminal devices is a problem to be resolved.

For ease of understanding, the following analyzes a possible resource conflict, a possible time conflict, a possible beam conflict, and the like by using three target terminal devices corresponding to a first terminal device as an example.

After the first terminal device performs beam sweeping based on a CSI-RS, SCI transmitted together with the CSI-RS carries IDs of the plurality of target terminal devices. The IDs of the plurality of target terminal devices are, for example, a terminal device 2, a terminal device 3, and a terminal device 4. The three target terminal devices all receive beams, and report beam response signals after reading respective ID information, to determine respective optimal beams. When the plurality of target terminal devices feed the beam response signals back, contention and a resource conflict may occur.

As an example, in a process of establishing the multicast link, two target terminal devices may transmit beam response signals in a same instant, and select a same optimal beam. In this case, the two target terminal devices may transmit same information to the first terminal device at a same time-frequency location. One possibility is that two signals interfere with each other, and the first terminal device cannot parse the two signals. Alternatively, signal aliasing occurs due to a reason such as signal strength or delay phase, and the first terminal device may not receive a related signal. That is, the first terminal device may not receive or parse a beam response signal of a target terminal device. The other possibility is that, it is assumed that the first terminal device may capture one beam response signal. In this case, the first terminal device can only assume that the signal is transmitted from a target terminal device. For example, a beam response signal of the terminal device 2 is successfully received by the first terminal device, but a beam response signal of the terminal device 3 fails to be received by the first terminal device. In this case, the terminal device 2 and the terminal device 3 may not know whether beam response signals of the terminal device 2 and the terminal device 3 are successfully received, and therefore cannot determine whether beam pairing succeeds.

To resolve the latter, the first terminal device may transmit third information according to at least one received beam response signal or report. The third information is used to instruct the first terminal device to establish a connection with at least one terminal device in the plurality of target terminal devices. That is, the first terminal device may notify, by using the third information, a target terminal device whose beam response signal is successfully received. For a terminal device whose beam response signal is successfully received, the terminal device may perform subsequent connection establishment with the first terminal device. For a terminal device whose beam response signal is not successfully received, the terminal device may continue to perform initial beam pairing with the first terminal device.

The example in the foregoing problem is still used for description. The first terminal device may transmit reply messages to the terminal device 2 and the terminal device 3 by using the third information. The response message includes ID information of a terminal device whose beam response signal is successfully received. After receiving the reply message that includes the ID information of the terminal device 2, the terminal device 2 may learn that beam pairing succeeds and initiate subsequent communication. When finding that there is no ID information of the terminal device 3, the terminal device 3 that fails to access improves transmit power, and receives a transmit signal from the first terminal device. This process is cyclically performed.

The foregoing describes beam pairing of a unicast link based on an IUC mechanism with reference to FIG. 15. For a multicast link, the IUC mechanism may also be used by terminal devices to exchange preferred or non-preferred resources, to avoid resource conflicts. Three target terminal devices are still used as an example. The three target terminal devices may perform sensing according to an IUC request of the first terminal device, and report a preferred or non-preferred resource according to a sensing result, to avoid an expected or potential resource conflict.

In some embodiments, when the first terminal device performs transmit beam sweeping, all the three target terminal devices receive the beam sweeping and read respective ID information. The three target terminal devices may further determine, based on decoded information, that current communication belongs to groupcast communication. After receiving the beam sweeping, each target terminal device needs to report a beam response signal, to determine an optimal beam for the target terminal device. If the terminal device 2 senses transmission from the terminal device 3 according to a beam of a beam pair in a beam pairing process, the terminal device 2 may notify the first terminal device of a preferred or non-preferred resource of the terminal device 2 according to a sensing result and/or an expected or potential resource conflict. For example, the terminal device 2 may perform transmission by using a PSFCH. An index of a preferred or non-preferred resource may be added in the PSFCH, or information that indicates a transmit or receive beam associated with a preferred or non-preferred resource may be added in an IUC message.

Exemplarily, each target terminal device may perform a same operation. For example, the first terminal device may receive notifications from the plurality of target terminal devices. If the first terminal device finds that there may be a potential conflict on a resource occupied by an optimal beam pair, the first terminal device may select a sub-optimal resource for transmission.

Because each target terminal device performs a same operation, to avoid a resource conflict, the first terminal device may waste preferred resources. For example, if the first terminal device receives notifications from the terminal device 2 and the terminal device 3, and discovers a potential conflict between resources occupied by optimal beam pairs of the terminal device 2 and the terminal device 3, the first terminal device may select sub-optimal resources of the terminal device 2 and the terminal device 3, thereby causing a waste of optimal resources.

To resolve this problem, the first terminal device may determine, based on fourth information, a plurality of beam pairs for establishing connections with the plurality of target terminal devices and/or a plurality of resources for communicating with the plurality of target terminal devices. The fourth information may include a time at which the plurality of target terminal devices transmit beam response signals or reports; signal quality in beam response signals or reports transmitted by the plurality of target terminal devices; a service priority of the plurality of target terminal devices; or quality of service (quality of service, QoS) of the plurality of target terminal devices.

Exemplarily, the first terminal device may select, according to factors such as a time at which a beam report response is received, a magnitude of RSRP reported in a beam report, or a priority of a service, an optimal resource and a sub-optimal resource for respectively performing transmission with the terminal device 2 and the terminal device 3, to avoid a conflict between a resource of the terminal device 2 and a resource of the terminal device 3.

When a multicast link or groupcast exists, the first terminal device may establish communication with a plurality of target terminal devices at the same time, and needs to complete beam pairing with the plurality of target terminal devices. In this process, a resource conflict and a beam conflict generally occur. To resolve these conflicts, an embodiment of the present application proposes a method for performing beam allocation according to one or more pieces of information in the fourth information. Through beam allocation, a resource conflict may be avoided, and beam pairing between the first terminal device and the plurality of target terminal devices may be optimal.

The following describes a method for performing a plurality of times of beam pairing by a first terminal device by using an example in which the first terminal device transmits a first sidelink CSI-RS by using M transmit beams and the first terminal device corresponds to K target terminal devices. It should be noted that another signal used for beam pairing may also be transmitted by using the M transmit beams.

The first terminal device transmits M beams, and each target terminal device measures signal quality of all beams of the first terminal device. A result of measuring a $j^{th}$ beam of the first terminal device by an $i^{th}$ target terminal device in the K target terminal devices is $Q_{i,j}$ (for example, $RSRP_{i,j}$), where i = 0,1,...k-1, and j = 0,1,...M-1. That is, i in $Q_{i,j}$ is a natural number ranging from 0 to K-1, and j in $Q_{i,j}$ is a natural number ranging from 0 to M-1.

A timer may be set for the first terminal device, to determine a time for performing beam allocation. For example, duration of the timer may be set to T. The first terminal device starts beam allocation after this duration passes. A time at which the $i^{th}$ terminal device in the K target terminal devices transmits a beam response is $t_i$, where $t_i \in [0,T]$. That is, after the first terminal device starts timing, the $i^{th}$ terminal device transmits a beam response at a time point with a distance of $t_i$ from a start time point, and the first terminal device terminates receiving of the beam response at a time point with a distance of T from the start time point.

A service level of each target terminal device may be fixed, for example, $R_i$. If allocation is unfair or a waiting time is extremely long, QoS performance of a target terminal device may degrade. A ratio by which QoS performance of the $i^{th}$ target terminal device degrades is set to $\alpha_i$, and $\alpha_i \in [0,1]$. If $\alpha_i = 0$, it indicates that the QoS performance of the $i^{th}$ target terminal device does not degrade. If $\alpha_i = 1$, it indicates that the QoS performance of the $i^{th}$ target terminal device degrades until a service is terminated.

To perform proper beam pairing with each target terminal device and avoid a conflict, an optimal principle of beam pairing is defined. For example, K beam pairs established by the first terminal device with the K target terminal devices meet the following optimal pairing principle:

$$Max \sum_{i=0}^{K-1}(P \times L)_i,$$

where P represents a K $\times$ M matrix that uses $P_{i,j}$ as an element, L represents an M $\times$ K matrix that uses $L_{j,i}$ as an element, i is a natural number ranging from 0 to K-1, j is a natural number ranging from 0 to M-1, $P_{i,j}$ represents a performance factor based on a $j^{th}$ transmit beam of an $i^{th}$ target terminal device in the K target terminal devices, and when $L_{j,i}$ is 1, it indicates that the $i^{th}$ target terminal device corresponds to the $j^{th}$ transmit beam.

P may also be referred to as a performance matrix of a beam, for example, P =

$$\begin{bmatrix} p_{0,0} & \cdots & p_{0,M-1} \\ \cdots & \cdots & \cdots \\ p_{K-1,0} & \cdots & p_{K-1,M-1} \end{bmatrix}_{K \times M}.$$

L may also be referred to as a beam allocation matrix of a target terminal device, for example,

$$L = \begin{bmatrix} L_{0,0} & \cdots & L_{0,K-1} \\ \cdots & \cdots & \cdots \\ L_{M-1,0} & \cdots & L_{M-1,K-1} \end{bmatrix}_{M \times K}.$$

Based on the foregoing optimal pairing principle and the performance matrix P, an L matrix may be solved. When $L_{j,i}$ = 1, it indicates that the $j^{th}$ transmit beam is allocated to the $i^{th}$ target terminal device. For example, matrix solution may be performed according to a Hungarian algorithm.

The performance factor $P_{i,j}$ may be determined based on one or more pieces of information in the fourth information. For example, the performance factor $P_{i,j}$ may meet the following condition:

$$P_{i,j} = Q_{i,j} \times \left(1 + \frac{t_i}{T} - \alpha_i\right),$$

where $Q_{i,j}$ represents signal quality of the $j^{th}$ transmit beam that is measured by the $i^{th}$ target terminal device, $t_i$ represents a time at which the $i^{th}$ target terminal device transmits a beam response signal or report, T represents a time at which the first terminal device receives all beam response signals or reports, $\alpha_i$ represents a ratio by which QoS of the $i^{th}$ target terminal device degrades, and $\alpha_i \in [0,1]$.

According to the foregoing allocation method, it can be ensured that a beam pair is established between the first terminal device and each target terminal device in a multicast communication environment, and no resource or beam conflict occurs.

The foregoing describes the method embodiments of the present application in detail with reference to FIG. 1 to FIG. 15. The following describes in detail the apparatus embodiments of the present application with reference to FIG. 16 to FIG. 18. It should be understood that the descriptions of the apparatus embodiments correspond to the descriptions of the method embodiments, and therefore, for parts that are not described in detail, refer to the foregoing method embodiments.

FIG. 16 is a schematic block diagram of an apparatus for sidelink communication according to an embodiment of the present application. The apparatus 1600 may be any one of the foregoing first terminal devices. The apparatus 1600 shown in FIG. 16 includes a transmitting unit 1610.

The transmitting unit 1610 may be configured to perform periodic transmission of a first sidelink CSI-RS by using a plurality of transmit beams, where the first sidelink CSI-RS is used by a target terminal device corresponding to the first terminal device to perform initial beam pairing, where a transmission resource corresponding to the first sidelink CSI-RS is determined based on a first parameter of the periodic transmission.

Optionally, the first parameter includes a first transmission period of the first sidelink CSI-RS, the first transmission period includes at least one first sidelink CSI-RS, and the first parameter further includes one or more of the following: a time domain offset of a $1^{st}$ sidelink CSI-RS in the first transmission period relative to a start of the first transmission period, a first time domain interval between two adjacent first sidelink CSI-RSs in the first transmission period, or a time resource occupied by at least one first sidelink CSI-RS in the first transmission period.

Optionally, at least one first sidelink CSI-RS in the first transmission period corresponds to a first reference signal burst set, the first reference signal burst set is used to determine a first index related to each sidelink CSI-RS in the first transmission period, and the first index includes one of the following: an index corresponding to each sidelink CSI-RS in the first reference signal burst set; an index corresponding to each reference signal burst in the first reference signal burst set; or an index corresponding to each sidelink CSI-RS in a reference signal burst of the first reference signal burst set.

Optionally, the first index is indicated in one or more of the following manners: SCI transmitted together with the first sidelink CSI-RS; or a plurality of bits carried in the first sidelink CSI-RS.

Optionally, a manner of transmitting the first sidelink CSI-RS includes one of the following: the first sidelink CSI-RS is not transmitted together with a sidelink shared channel; or the first sidelink CSI-RS is transmitted together with a sidelink shared channel.

Optionally, the transmission resource corresponding to the first sidelink CSI-RS is further used to transmit first information, the first information includes identification information of the first terminal device and/or the target terminal device, the first sidelink CSI-RS is not transmitted together with a sidelink shared channel, and the first information is transmitted by using one or more of the following: SCI, an S-PSS, and/or an S-SSS.

Optionally, the transmission resource corresponding to the first sidelink CSI-RS is further used to transmit first information, the first information includes identification information of the first terminal device and/or the target terminal device, the first sidelink CSI-RS is transmitted together with a PSSCH, and the first information is carried in first stage SCI corresponding to a PSCCH and/or second stage SCI corresponding to a PSSCH.

Optionally, the first parameter is determined based on first configuration of the first terminal device, and the first configuration is further used to indicate one or more of the following: a mapping relationship between the plurality of transmit beams and the transmission resource corresponding to the first sidelink CSI-RS; a resource of a CSI report related to the first sidelink CSI-RS; or a resource of a plurality of beam response signals or reports that are in a one-to-one correspondence with the plurality of transmit beams.

Optionally, the first configuration is further used to indicate the resource of the plurality of beam response signals or reports that are in the one-to-one correspondence with the plurality of transmit beams, and the beam response signals or reports are transmitted by using one or more of the following: a MAC CE or a PSFCH.

Optionally, the target terminal device includes a second terminal device, and the apparatus 1600 further includes: a first determining unit, determining a first beam pair based on a beam response signal or report transmitted by the second terminal device, where the beam response signal or report is determined based on signal quality of a transmit beam received by the second terminal device, and the first beam pair is used for sidelink communication between the first terminal device and the second terminal device.

Optionally, the beam response signal or report transmitted by the second terminal device is used to indicate one or more of the following information: identification information of the second terminal device; identification information of the first terminal device; an identifier of a transmit beam and/or a receive beam corresponding to the beam response signal or report; or information about association between a transmit beam and/or a receive beam corresponding to the beam response signal or report and a time resource.

Optionally, the transmission resource corresponding to the first sidelink CSI-RS is further used to transmit second information, and the second information is used to instruct the target terminal device to perform resource sensing according to a received transmit beam and/or a receive beam corresponding to a received transmit beam.

Optionally, the target terminal device includes a second terminal device, the first sidelink CSI-RS is used by the first terminal device and the second terminal device to determine a plurality of beam pairs, the plurality of beam pairs include a first beam pair and a second beam pair that are determined based on signal strength, and the apparatus 1600 further includes: a second determining unit, determining, based on a sensing result transmitted by the second terminal device, whether there is a resource conflict on a first resource related to the first beam pair; and a transmission unit, if there is a resource conflict on the first resource, performing sidelink communication with the second terminal device by using the second beam pair, or, transmitting or receiving a beam by using a second resource related to the first beam pair.

Optionally, the first terminal device corresponds to a plurality of target terminal devices, the transmitting unit 1610 is further configured to transmit, based on at least one received beam response signal or report, third information, where the third information is used to instruct the first terminal device to establish a connection with at least one target terminal device in the plurality of target terminal devices.

Optionally, the first terminal device corresponds to a plurality of target terminal devices, and the apparatus 1600 further includes: a third determining unit, determining, based on fourth information, a plurality of beam pairs for establishing connections with the plurality of target terminal devices, where the fourth information includes one or more of the following information: a time at which the plurality of target terminal devices transmit beam response signals or reports; signal quality in beam response signals or reports transmitted by the plurality of target terminal devices; a service priority of the plurality of target terminal devices; or QoS of the plurality of target terminal devices.

Optionally, the first sidelink CSI-RS is transmitted by using M transmit beams, the first terminal device corresponds to K target terminal devices, and K beam pairs established between the first terminal device and the K target terminal devices meet the following pairing principle:

$$Max \sum_{i=0}^{K-1}(P \times L)_i,$$

where P represents a $K \times M$ matrix that uses $P_{i,j}$ as an element, L represents an $M \times K$ matrix that uses $L_{j,i}$ as an element, i is a natural number ranging from 0 to K-1, j is a natural number ranging from 0 to M-1, $P_{i,j}$ represents a performance factor based on a $j^{th}$ transmit beam of an $i^{th}$ target terminal device in K target terminal devices, and when $L_{j,i}$ is 1, it indicates that the $i^{th}$ target terminal device corresponds to the $j^{th}$ transmit beam.

Optionally, the performance factor $P_{i,j}$ meets the following condition:

$$P_{i,j} = Q_{i,j} \times (1 + \frac{t_i}{T} - \alpha_i),$$

where $Q_{i,j}$ represents signal quality of the $j^{th}$ transmit beam that is measured by the $i^{th}$ target terminal device, $t_i$ represents a time at which the $i^{th}$ target terminal device transmits a beam response signal or report, T represents a time at which the first terminal device receives all beam response signals or reports, $\alpha_i$ represents a ratio by which QoS of the $i^{th}$ target terminal device degrades, and $\alpha_i \in [0,1]$.

FIG. 17 is a schematic block diagram of an apparatus for sidelink communication according to an embodiment of the present application. The apparatus 1700 may be any of the foregoing second terminal devices. The apparatus 1700 shown in FIG. 17 includes a receiving unit 1710.

The receiving unit 1710 is configured to receive a first sidelink CSI-RS obtained through periodic transmission performed by a first terminal device by using a plurality of transmit beams, where the first sidelink CSI-RS is used by a target terminal device corresponding to the first terminal device to perform initial beam pairing, where a transmission resource corresponding to the first sidelink CSI-RS is determined based on a first parameter of the periodic transmission.

Optionally, the first parameter includes a first transmission period of the first sidelink CSI-RS, the first transmission period includes at least one first sidelink CSI-RS, and the first parameter further includes one or more of the following: a time domain offset of a $1^{st}$ sidelink CSI-RS in the first transmission period relative to a start of the first transmission period, a first time domain interval between two adjacent first sidelink CSI-RSs in the first transmission period, or a time resource occupied by at least one first sidelink CSI-RS in the first transmission period.

Optionally, at least one first sidelink CSI-RS in the first transmission period corresponds to a first reference signal burst set, the first reference signal burst set is used to determine a first index related to each sidelink CSI-RS in the first transmission period, and the first index includes one of the following: an index corresponding to each sidelink CSI-RS in the first reference signal burst set; an index corresponding to each reference signal burst in the first reference signal burst set; or an index corresponding to each sidelink CSI-RS in a reference signal burst of the first reference signal burst set.

Optionally, the first index is indicated in one or more of the following manners: SCI transmitted together with the first sidelink CSI-RS; or a plurality of bits carried in the first sidelink CSI-RS.

Optionally, a manner of transmitting the first sidelink CSI-RS includes one of the following: the first sidelink CSI-RS is not transmitted together with a sidelink shared channel; or the first sidelink CSI-RS is transmitted together with a sidelink shared channel.

Optionally, the transmission resource corresponding to the first sidelink CSI-RS is further used to transmit first information, the first information includes identification information of the first terminal device and/or the target terminal device, the first sidelink CSI-RS is not transmitted together with a sidelink shared channel, and the first information is transmitted by using one or more of the following: SCI, an S-PSS, and/or an S-SSS.

Optionally, the transmission resource corresponding to the first sidelink CSI-RS is further used to transmit first information, the first information includes identification information of the first terminal device and/or the target terminal device, the first sidelink CSI-RS is transmitted together with a PSSCH, and the first information is carried in first stage SCI corresponding to a PSCCH and/or second stage SCI corresponding to a PSSCH.

Optionally, the first parameter is determined based on first configuration of the first terminal device, and the first configuration is further used to indicate one or more of the following: a mapping relationship between the plurality of transmit beams and the transmission resource corresponding to the first sidelink CSI-RS; a resource of a CSI report related to the first sidelink CSI-RS; or a resource of a plurality of beam response signals or reports that are in a one-to-one correspondence with the plurality of transmit beams.

Optionally, the first configuration is further used to indicate the resource of the plurality of beam response signals or reports that are in the one-to-one correspondence with the plurality of transmit beams, and the beam response signals or reports are transmitted by using one or more of the following: a MAC CE or a PSFCH.

Optionally, the target terminal device includes a second terminal device, and the apparatus 1700 further includes: a first determining unit, determining a first beam pair based on a beam response signal or report transmitted by the second terminal device, where the beam response signal or report is determined based on signal quality of a transmit beam received by the second terminal device, and the first beam pair is used for sidelink communication between the first terminal device and the second terminal device.

Optionally, the beam response signal or report transmitted by the second terminal device is used to indicate one or more of the following information: identification information of the second terminal device; identification information of the first terminal device; an identifier of a transmit beam and/or a receive beam corresponding to the beam response signal or report; or information about association between a transmit beam and/or a receive beam corresponding to the beam response signal or report and a time resource.

Optionally, the target terminal device includes a second terminal device, and the transmission resource corresponding to the first sidelink CSI-RS is further used to transmit second information, and the second information is used to instruct the target terminal device to perform resource sensing according to a received transmit beam and/or a receive beam corresponding to a received transmit beam.

Optionally, the first sidelink CSI-RS is used by the first terminal device and the second terminal device to determine a plurality of beam pairs, the plurality of beam pairs include a first beam pair and a second beam pair that are determined based on signal strength, and the apparatus 1700 further includes: a second transmitting unit, transmitting a sensing result to the first terminal device; and a transmission unit, if the sensing result indicates a resource conflict on a first resource related to the first beam pair, performing sidelink communication with the first terminal device by using the second beam pair, or receiving or transmitting a beam by using a second resource related to the first beam pair.

Optionally, the target terminal device includes a second terminal device, and the apparatus 1700 further includes: a third determining unit, transmitting a beam response signal or report to the first terminal device; and the receiving unit 1710 is further configured to receive third information transmitted by the first terminal device, where the third information is used to indicate whether the first terminal device establishes a connection with the second terminal device.

Optionally, the target terminal device includes a second terminal device, and one or more of the following information related to the second terminal device is used by the first terminal device to determine a beam pair for establishing a connection with the second terminal device: a time at which the second terminal device transmits a beam response signal or report; signal quality in a beam response signal or report transmitted by the second terminal device; a service priority of the second terminal device; or QoS of the second terminal device.

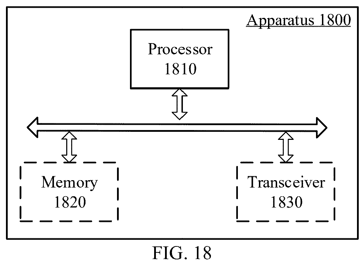

FIG. 18 is a schematic structural diagram of a communications apparatus according to an embodiment of the present application. Dashed lines in FIG. 18 indicate that units or modules are optional. The apparatus 1800 may be configured to implement a method described in the foregoing method embodiments. The apparatus 1800 may be a chip or a terminal device.

The apparatus 1800 may include one or more processors 1810. The processor 1810 may support the apparatus 1800 to implement a method described in the foregoing method embodiments. The processor 1810 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1800 may further include one or more memories 1820. The memory 1820 stores a program, and the program may be executed by the processor 1810, so that the processor 1810 executes a method described in the foregoing method embodiments. The memory 1820 may be separate from or integrated into the processor 1810.

The apparatus 1800 may further include a transceiver 1830. The processor 1810 may communicate with another device or chip by using the transceiver 1830. For example, the processor 1810 may transmit or receive data to or from another device or chip by using the transceiver 1830.

An embodiment of the present application further provides a computer-readable storage medium for storing a program. The computer-readable storage medium may be applied to a terminal device or a network device provided in embodiments of the present application, and the program causes a computer to execute a method executed by the terminal device or the network device in various embodiments of the present application.

The computer-readable storage medium may be any usable medium that a computer can read, or a data storage device such as a server or a data center that includes one or more available media integrations. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

An embodiment of the present application further provides a computer program product. The computer program product includes a program. The computer program product may be applied to a terminal device or a network device provided in embodiments of the present application, and the program causes a computer to execute a method executed by the terminal or the network device in various embodiments of the present application.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of the present application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (such as a coaxial cable, an optical fiber, and a digital subscriber line (digital subscriber line, DSL)) manner or a wireless (such as infrared, wireless, and microwave) manner.

An embodiment of the present application further provides a computer program. The computer program may be applied to a terminal device or a network device provided in embodiments of the present application, and the computer program causes a computer to execute a method executed by the terminal or the network device in various embodiments of the present application.

The terms "system" and "network" in the present application may be used interchangeably. In addition, the terms used in the present application are only used to explain the specific embodiments of the present application, and are not intended to limit the present application. In the specification, claims, and accompanying drawings of the present application, the terms "first", "second", "third", "fourth", and so on are intended to distinguish between different objects but do not describe a particular order. In addition, the terms "include" and "have" and any variations thereof are intended to cover a non-exclusive inclusion.

In embodiments of the present application, "indicate" mentioned herein may refer to a direct indication, or may refer to an indirect indication, or may mean that there is an association relationship. For example, A indicates B, which may mean that A directly indicates B, for example, B may be obtained by using A; or may mean that A indirectly indicates B, for example, A indicates C, and B may be obtained by using C; or may mean that there is an association relationship between A and B.

In embodiments of the present application, the term "corresponding" may mean that there is a direct or indirect correspondence between the two, or may mean that there is an association relationship between the two, which may also be a relationship such as indicating and being indicated, or configuring and being configured.

In embodiments of the present application, "pre-defined" or "pre-configured" may be implemented by pre-storing corresponding codes, tables, or other forms that can be used to indicate related information in devices (for example, including the terminal device and the network device), and a specific implementation thereof is not limited in the present application. For example, being pre-defined may refer to being defined in a protocol.

In embodiments of the present application, the "protocol" may refer to a standard protocol in the communications field, and may include, for example, an LTE protocol, an NR protocol, and a related protocol applied to a future communications system, which is not limited in the present application.

In embodiments of the present application, determining B based on A does not mean determining B based on only A, but instead B may be determined based on A and/or other information.

In embodiments of the present application, the term "and/or" is merely an association relationship that describes associated objects, and represents that there may be three relationships. For example, A and/or B may represent three cases: only A exists, both A and B exist, and only B exists. In addition, the character "/" herein generally indicates an "or" relationship between the associated objects.

In embodiments of the present application, sequence numbers of the foregoing processes do not mean execution sequences. The execution sequences of the processes should be determined based on functions and internal logic of the processes, and should not be construed as any limitation on the implementation processes of embodiments of the present application.

In several embodiments provided in the present application, it should be understood that, the disclosed system, apparatus, and method may be implemented in other manners. For example, the foregoing described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between apparatuses or units may be implemented in electrical, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objectives of the solutions of embodiments.

In addition, functional units in embodiments of the present application may be integrated into one processing unit, or each of the units may exist alone physically, or two or more units may be integrated into one unit.

The foregoing descriptions are merely specific implementations of the present application, but the protection scope of the present application is not limited thereto. Any variation or replacement readily figured out by a person skilled in the art within the technical scope disclosed in the present application shall fall within the protection scope of the present application. Therefore, the protection scope of the present application shall be subject to the protection scope of the claims.

**Claims**

**1.** A method for sidelink communication, comprising:

performing, by a first terminal device, periodic transmission of a first sidelink channel state information reference signal CSI-RS by using a plurality of transmit beams, wherein the first sidelink CSI-RS is used by a target terminal device corresponding to the first terminal device to perform initial beam pairing,

wherein a transmission resource corresponding to the first sidelink CSI-RS is determined based on a first parameter of the periodic transmission.

2. The method according to claim 1, wherein the first parameter comprises a first transmission period of the first sidelink CSI-RS, the first transmission period comprises at least one first sidelink CSI-RS, and the first parameter further comprises one or more of following:

   a time domain offset of a $1^{st}$ sidelink CSI-RS in the first transmission period relative to a start of the first transmission period;
   a time domain interval between two adjacent first sidelink CSI-RSs in the first transmission period; or
   a time resource occupied by at least one first sidelink CSI-RS in the first transmission period.

3. The method according to claim 2, wherein at least one first sidelink CSI-RS in the first transmission period corresponds to a first reference signal burst set, the first reference signal burst set is used to determine a first index related to each sidelink CSI-RS in the first transmission period, and the first index comprises one of following:

   an index corresponding to each sidelink CSI-RS in the first reference signal burst set;
   an index corresponding to each reference signal burst in the first reference signal burst set; or
   an index corresponding to each sidelink CSI-RS in a reference signal burst of the first reference signal burst set.

4. The method according to claim 3, wherein the first index is indicated in one or more of following manners:

   sidelink control information SCI transmitted together with the first sidelink CSI-RS; or
   a plurality of bits carried in the first sidelink CSI-RS.

5. The method according to any one of claims 1 to 4, wherein a manner of transmitting the first sidelink CSI-RS comprises one of following:

   the first sidelink CSI-RS is not transmitted together with a sidelink shared channel; or

   the first sidelink CSI-RS is transmitted together with a sidelink shared channel.

6. The method according to claim 5, wherein the transmission resource corresponding to the first sidelink CSI-RS is further used to transmit first information, the first information comprises identification information of the first terminal device and/or the target terminal device, the first sidelink CSI-RS is not transmitted together with a sidelink shared channel, and the first information is transmitted by using one or more of following: SCI, a sidelink primary synchronization signal S-PSS, and/or a sidelink secondary synchronization signal S-SSS.

7. The method according to claim 5, wherein the transmission resource corresponding to the first sidelink CSI-RS is further used to transmit first information, the first information comprises identification information of the first terminal device and/or the target terminal device, the first sidelink CSI-RS is transmitted together with a physical sidelink shared channel PSSCH, and the first information is carried in first stage SCI corresponding to a physical sidelink control channel PSCCH and/or second stage SCI corresponding to a PSSCH.

8. The method according to any one of claims 1 to 7, wherein the first parameter is determined based on first configuration of the first terminal device, and the first configuration is further used to indicate one or more of following:

   a mapping relationship between the plurality of transmit beams and the transmission resource corresponding to the first sidelink CSI-RS;
   a resource of a CSI report related to the first sidelink CSI-RS; or
   a resource of a plurality of beam response signals or reports that are in a one-to-one correspondence with the plurality of transmit beams.

9. The method according to claim 8, wherein the first configuration is further used to indicate the resource of the plurality of beam response signals or reports that are in the one-to-one correspondence with the plurality of transmit beams, and the beam response signals or reports are transmitted by using one or more of following: a medium access control control element MAC CE or a physical sidelink feedback channel PSFCH.

10. The method according to any one of claims 1 to 9, wherein the target terminal device comprises a second terminal device, and the method further comprises:
   determining, by the first terminal device, a first beam pair based on a beam response signal or report transmitted by the second terminal device, wherein the beam response signal or report is determined based on signal quality of a transmit beam received by the second terminal device, and the first beam pair is used for sidelink communication between the first terminal device and the second terminal device.

11. The method according to claim 10, wherein the beam response signal or report transmitted by the second terminal device is used to indicate one or more of following information:

identification information of the second terminal device;
identification information of the first terminal device;
an identifier of a transmit beam and/or a receive beam corresponding to the beam response signal or report; or
information about association between a transmit beam and/or a receive beam corresponding to the beam response signal or report and a time resource.

12. The method according to any one of claims 1 to 11, wherein the transmission resource corresponding to the first sidelink CSI-RS is further used to transmit second information, and the second information is used to instruct the target terminal device to perform resource sensing according to a received transmit beam and/or a receive beam corresponding to a received transmit beam.

13. The method according to claim 12, wherein the target terminal device comprises a second terminal device, the first sidelink CSI-RS is used by the first terminal device and the second terminal device to determine a plurality of beam pairs, the plurality of beam pairs comprise a first beam pair and a second beam pair that are determined based on signal strength, and the method further comprises:

determining, by the first terminal device based on a sensing result transmitted by the second terminal device, whether there is a resource conflict on a first resource related to the first beam pair; and
if there is a resource conflict on the first resource, performing, by the first terminal device, sidelink communication with the second terminal device by using the second beam pair; or,
if there is a resource conflict on the first resource, transmitting or receiving, by the first terminal device, a beam by using a second resource related to the first beam pair.

14. The method according to any one of claims 1 to 13, wherein the first terminal device corresponds to a plurality of target terminal devices, and the method further comprises:
transmitting, by the first terminal device based on at least one received beam response signal or report, third information, wherein the third information is used to instruct the first terminal device to establish a connection with at least one target terminal device in the plurality of target terminal devices.

15. The method according to any one of claims 1 to 14, wherein the first terminal device corresponds to a plurality of target terminal devices, and the method further comprises:
determining, by the first terminal device based on fourth information, a plurality of beam pairs for establishing connections with the plurality of target terminal devices, wherein the fourth information comprises one or more of following information:

a time at which the plurality of target terminal devices transmit beam response signals or reports;
signal quality in beam response signals or reports transmitted by the plurality of target terminal devices;
a service priority of the plurality of target terminal devices; or
quality of service QoS of the plurality of target terminal devices.

16. The method according to claim 15, wherein the first sidelink CSI-RS is transmitted by using M transmit beams, the first terminal device corresponds to K target terminal devices, and K beam pairs established between the first terminal device and the K target terminal devices meet following pairing principle:

$$Max \sum_{i=0}^{K-1}(P \times L)_i,$$

wherein P represents a K $\times$ M matrix that uses $P_{i,j}$ as an element, L represents an M $\times$ K matrix that uses $L_{j,i}$ as an element, i is a natural number ranging from 0 to K-1, j is a natural number ranging from 0 to M-1, $P_{i,j}$ represents a performance factor based on a $j^{th}$ transmit beam of an $i^{th}$ target terminal device in K target terminal devices, and when $L_{j,i}$ is 1, it indicates that the $i^{th}$ target terminal device corresponds to the $j^{th}$ transmit beam.

17. The method according to claim 16, wherein the performance factor $P_{i,j}$ meets following condition:

$$P_{i,j} = Q_{i,j} \times (1 + \frac{t_i}{T} - \alpha_i),$$

wherein $Q_{i,j}$ represents signal quality of the $j^{th}$ transmit beam that is measured by the $i^{th}$ target terminal device, $t_i$ represents a time at which the $i^{th}$ target terminal device transmits a beam response signal or report, T represents a time at which the first terminal device receives all beam response signals or reports, $\alpha_i$ represents a ratio by which QoS of the $i^{th}$ target terminal device degrades, and $\alpha_i \in [0,1]$.

18. A method for wireless communication, comprising:

receiving, by a second terminal device, a first sidelink channel state information reference signal CSI-RS obtained through periodic transmission performed by a first terminal device by using a plurality of transmit beams, wherein the first sidelink CSI-RS is used by a target terminal device corresponding to the first terminal device to perform initial beam pairing,
wherein a transmission resource corresponding to the first sidelink CSI-RS is determined based on a first parameter of the periodic transmission.

19. The method according to claim 18, wherein the first parameter comprises a first transmission period of the first sidelink CSI-RS, the first transmission period comprises at least one first sidelink CSI-RS, and the first parameter further comprises one or more of following:

a time domain offset of a $1^{st}$ sidelink CSI-RS in the first transmission period relative to a start of the first transmission period;
a time domain interval between two adjacent first sidelink CSI-RSs in the first transmission period; or
a time resource occupied by at least one first sidelink CSI-RS in the first transmission period.

20. The method according to claim 19, wherein at least one first sidelink CSI-RS in the first transmission period corresponds to a first reference signal burst set, the first reference signal burst set is used to determine a first index related to each sidelink CSI-RS in the first transmission period, and the first index comprises one of following:

an index corresponding to each sidelink CSI-RS in the first reference signal burst set;
an index corresponding to each reference signal burst in the first reference signal burst set; or
an index corresponding to each sidelink CSI-RS in a reference signal burst of the first reference signal burst set.

21. The method according to claim 20, wherein the first index is indicated in one or more of following manners:

sidelink control information SCI transmitted together with the first sidelink CSI-RS; or
a plurality of bits carried in the first sidelink CSI-RS.

22. The method according to any one of claims 18 to 21, wherein a manner of transmitting the first sidelink CSI-RS comprises one of following:

the first sidelink CSI-RS is not transmitted together with a sidelink shared channel; or
the first sidelink CSI-RS is transmitted together with a sidelink shared channel.

23. The method according to claim 22, wherein the transmission resource corresponding to the first sidelink CSI-RS is further used to transmit first information, the first information comprises identification information of the first terminal device and/or the target terminal device, the first sidelink CSI-RS is not transmitted together with a sidelink shared channel, and the first information is transmitted by using one or more of following: SCI, a sidelink primary synchronization signal S-PSS, and/or a sidelink secondary synchronization signal S-SSS.

24. The method according to claim 22, wherein the transmission resource corresponding to the first sidelink CSI-RS is further used to transmit first information, the first information comprises identification information of the first terminal device and/or the target terminal device, the first sidelink CSI-RS is transmitted together with a physical sidelink shared channel PSSCH, and the first information is carried in first stage SCI corresponding to a physical sidelink control channel PSCCH and/or second stage SCI corresponding to a PSSCH.

25. The method according to any one of claims 18 to 24, wherein the first parameter is determined based on first configuration of the first terminal device, and the first configuration is further used to indicate one or more of following:

a mapping relationship between the plurality of transmit beams and the transmission resource corresponding to the first sidelink CSI-RS;
a resource of a CSI report related to the first sidelink CSI-RS; or
a resource of a plurality of beam response signals or reports that are in a one-to-one correspondence with the plurality of transmit beams.

26. The method according to claim 25, wherein the first configuration is further used to indicate the resource of the plurality of beam response signals or reports that are in the one-to-one correspondence with the plurality of transmit beams, and the beam response signals or reports are transmitted by using one or more of following: a medium access control control element MAC CE or a physical sidelink feedback channel PSFCH.

27. The method according to any one of claims 18 to 26, wherein the target terminal device comprises the second terminal device, and the method further comprises:
transmitting, by the second terminal device, a beam response signal or report to the first terminal device, to determine a first beam pair, wherein the beam response signal or report is determined based on signal quality of a transmit beam received by the second terminal device, and the first beam pair is used for sidelink communication between the first terminal device and the second terminal device.

28. The method according to claim 27, wherein the beam response signal or report transmitted by the second terminal device is used to indicate one or more of following information:

    identification information of the second terminal device;
    identification information of the first terminal device;
    an identifier of a transmit beam and/or a receive beam corresponding to the beam response signal or report; or
    information about association between a transmit beam and/or a receive beam corresponding to the beam response signal or report and a time resource.

29. The method according to any one of claims 18 to 28, wherein the target terminal device comprises the second terminal device, the transmission resource corresponding to the first sidelink CSI-RS is further used to transmit second information, and the second information is used to instruct the second terminal device to perform resource sensing according to a received transmit beam and/or a receive beam corresponding to a received transmit beam.

30. The method according to claim 29, wherein the first sidelink CSI-RS is used by the first terminal device and the second terminal device to determine a plurality of beam pairs, the plurality of beam pairs comprise a first beam pair and a second beam pair that are determined based on signal strength, and the method further comprises:

    transmitting, by the second terminal device, a sensing result to the first terminal device; and
    if the sensing result indicates a resource conflict on a first resource related to the first beam pair, performing, by the second terminal device, sidelink communication with the first terminal device by using the second beam pair; or,
if the sensing result indicates a resource conflict on a first resource related to the first beam pair, receiving or transmitting, by the second terminal device, a beam by using a second resource related to the first beam pair.

31. The method according to any one of claims 18 to 30, wherein the target terminal device comprises the second terminal device, and the method further comprises:

    transmitting, by the second terminal device, a beam response signal or report to the first terminal device; and
    receiving, by the second terminal device, third information transmitted by the first terminal device, wherein the third information is used to indicate whether the first terminal device establishes a connection with the second terminal device.

32. The method according to any one of claims 18 to 31, wherein the target terminal device comprises the second terminal device, and one or more of following information related to the second terminal device is used by the first terminal device to determine a beam pair for establishing a connection with the second terminal device:

    a time at which the second terminal device transmits a beam response signal or report;
    signal quality in a beam response signal or report transmitted by the second terminal device;
    a service priority of the second terminal device; or
    quality of service QoS of the second terminal device.

33. An apparatus for sidelink communication, wherein the apparatus is a first terminal device, and the first terminal device comprises:

    a transmitting unit, performing periodic transmission of a first sidelink channel state information reference signal CSI-RS by using a plurality of transmit beams, wherein the first sidelink CSI-RS is used by a target terminal device corresponding to the first terminal device to perform initial beam pairing,
    wherein a transmission resource corresponding to the first sidelink CSI-RS is determined based on a first parameter of the periodic transmission.

34. The apparatus according to claim 33, wherein the first parameter comprises a first transmission period of the first sidelink CSI-RS, the first transmission period comprises at least one first sidelink CSI-RS, and the first parameter further comprises one or more of following:

a time domain offset of a $1^{st}$ sidelink CSI-RS in the first transmission period relative to a start of the first transmission period;
a time domain interval between two adjacent first sidelink CSI-RSs in the first transmission period; or
a time resource occupied by at least one first sidelink CSI-RS in the first transmission period.

35. The apparatus according to claim 34, wherein at least one first sidelink CSI-RS in the first transmission period corresponds to a first reference signal burst set, the first reference signal burst set is used to determine a first index related to each sidelink CSI-RS in the first transmission period, and the first index comprises one of following:

an index corresponding to each sidelink CSI-RS in the first reference signal burst set;
an index corresponding to each reference signal burst in the first reference signal burst set; or
an index corresponding to each sidelink CSI-RS in a reference signal burst of the first reference signal burst set.

36. The apparatus according to claim 35, wherein the first index is indicated in one or more of following manners:

sidelink control information SCI transmitted together with the first sidelink CSI-RS; or
a plurality of bits carried in the first sidelink CSI-RS.

37. The apparatus according to any one of claims 33 to 36, wherein a manner of transmitting the first sidelink CSI-RS comprises one of following:

the first sidelink CSI-RS is not transmitted together with a sidelink shared channel; or
the first sidelink CSI-RS is transmitted together with a sidelink shared channel.

38. The apparatus according to claim 37, wherein the transmission resource corresponding to the first sidelink CSI-RS is further used to transmit first information, the first information comprises identification information of the first terminal device and/or the target terminal device, the first sidelink CSI-RS is not transmitted together with a sidelink shared channel, and the first information is transmitted by using one or more of following: SCI, a sidelink primary synchronization signal S-PSS, and/or a sidelink secondary synchronization signal S-SSS.

39. The apparatus according to claim 37, wherein the transmission resource corresponding to the first sidelink CSI-RS is further used to transmit first information, the first information comprises identification information of the first terminal device and/or the target terminal device, the first sidelink CSI-RS is transmitted together with a physical sidelink shared channel PSSCH, and the first information is carried in first stage SCI corresponding to a physical sidelink control channel PSCCH and/or second stage SCI corresponding to a PSSCH.

40. The apparatus according to any one of claims 33 to 39, wherein the first parameter is determined based on first configuration of the first terminal device, and the first configuration is further used to indicate one or more of following:

a mapping relationship between the plurality of transmit beams and the transmission resource corresponding to the first sidelink CSI-RS;
a resource of a CSI report related to the first sidelink CSI-RS; or
a resource of a plurality of beam response signals or reports that are in a one-to-one correspondence with the plurality of transmit beams.

41. The apparatus according to claim 40, wherein the first configuration is further used to indicate the resource of the plurality of beam response signals or reports that are in the one-to-one correspondence with the plurality of transmit beams, and the beam response signals or reports are transmitted by using one or more of following: a medium access control control element MAC CE or a physical sidelink feedback channel PSFCH.

42. The apparatus according to any one of claims 33 to 41, wherein the target terminal device comprises a second terminal device, and the first terminal device further comprises:
a first determining unit, determining a first beam pair based on a beam response signal or report transmitted by the second terminal device, wherein the beam response signal or report is determined based on signal quality of a transmit beam received by the second terminal device, and the first beam pair is used for sidelink communication between the first terminal device and the second terminal device.

43. The apparatus according to claim 42, wherein the beam response signal or report transmitted by the second terminal device is used to indicate one or more of following information:

identification information of the second terminal device;
identification information of the first terminal device;
an identifier of a transmit beam and/or a receive beam corresponding to the beam response signal or report; or
information about association between a transmit beam and/or a receive beam corresponding to the beam response signal or report and a time resource.

44. The apparatus according to any one of claims 33 to 43, wherein the transmission resource corresponding to the first sidelink CSI-RS is further used to transmit second information, and the second information is used to instruct the target terminal device to perform resource sensing according to a received transmit beam and/or a receive beam corresponding to a received transmit beam.

45. The apparatus according to claim 44, wherein the target terminal device comprises a second terminal device, the first sidelink CSI-RS is used by the first terminal device and the second terminal device to determine a plurality of beam pairs, the plurality of beam pairs comprise a first beam pair and a second beam pair that are determined based on signal strength, and the first terminal device further comprises:

a second determining unit, determining, based on a sensing result transmitted by the second terminal device, whether there is a resource conflict on a first resource related to the first beam pair; and
a transmission unit, if there is a resource conflict on the first resource, performing sidelink communication with the second terminal device by using the second beam pair, or, transmitting or receiving a beam by using a second resource related to the first beam pair.

46. The apparatus according to any one of claims 33 to 45, wherein the first terminal device corresponds to a plurality of target terminal devices, the transmitting unit is further configured to transmit, based on at least one received beam response signal or report, third information, wherein the third information is used to instruct the first terminal device to establish a connection with at least one target terminal device in the plurality of target terminal devices.

47. The apparatus according to any one of claims 33 to 46, wherein the first terminal device corresponds to a plurality of target terminal devices, and the first terminal device further comprises:
a third determining unit, determining, based on fourth information, a plurality of beam pairs for establishing connections with the plurality of target terminal devices, wherein the fourth information comprises one or more of following information:

a time at which the plurality of target terminal devices transmit beam response signals or reports;
signal quality in beam response signals or reports transmitted by the plurality of target terminal devices;
a service priority of the plurality of target terminal devices; or
quality of service QoS of the plurality of target terminal devices.

48. The apparatus according to claim 47, wherein the first sidelink CSI-RS is transmitted by using M transmit beams, the first terminal device corresponds to K target terminal devices, and K beam pairs established between the first terminal device and the K target terminal devices meet following pairing principle:

$$Max \sum_{i=0}^{K-1} (P \times L)_i,$$

wherein P represents a $K \times M$ matrix that uses $P_{i,j}$ as an element, L represents an $M \times K$ matrix that uses $L_{j,i}$ as an element, i is a natural number ranging from 0 to K-1, j is a natural number ranging from 0 to M-1, $P_{i,j}$ represents a performance factor based on a $j^{th}$ transmit beam of an $i^{th}$ target terminal device in K target terminal devices, and when $L_{j,i}$ is 1, it indicates that the $i^{th}$ target terminal device corresponds to the $j^{th}$ transmit beam.

49. The apparatus according to claim 48, wherein the performance factor $P_{i,j}$ meets following condition:

$$P_{i,j} = Q_{i,j} \times (1 + \frac{t_i}{T} - \alpha_i),$$

wherein $Q_{i,j}$ represents signal quality of the $j^{th}$ transmit beam that is measured by the $i^{th}$ target terminal device, $t_i$ represents a time at which the $i^{th}$ target terminal device transmits a beam response signal or report, T represents a time at which the first terminal device receives all beam response signals or reports, $\alpha_i$ represents a ratio by which QoS of the $i^{th}$ target terminal device degrades, and $\alpha_i \in [0,1]$.

50. An apparatus for wireless communication, wherein the apparatus is a second terminal device, and the second terminal device comprises:

a receiving unit, receiving a first sidelink channel state information reference signal CSI-RS obtained through periodic transmission performed by a first terminal device by using a plurality of transmit beams, wherein the first sidelink CSI-RS is used by a target terminal device corresponding to the first terminal device to perform initial beam pairing,

wherein a transmission resource corresponding to the first sidelink CSI-RS is determined based on a first parameter of the periodic transmission.

51. The apparatus according to claim 50, wherein the first parameter comprises a first transmission period of the first sidelink CSI-RS, the first transmission period comprises at least one first sidelink CSI-RS, and the first parameter further comprises one or more of following:

a time domain offset of a 1st sidelink CSI-RS in the first transmission period relative to a start of the first transmission period;
a time domain interval between two adjacent first sidelink CSI-RSs in the first transmission period; or
a time resource occupied by at least one first sidelink CSI-RS in the first transmission period.

52. The apparatus according to claim 51, wherein at least one first sidelink CSI-RS in the first transmission period corresponds to a first reference signal burst set, the first reference signal burst set is used to determine a first index related to each sidelink CSI-RS in the first transmission period, and the first index comprises one of following:

an index corresponding to each sidelink CSI-RS in the first reference signal burst set;
an index corresponding to each reference signal burst in the first reference signal burst set; or
an index corresponding to each sidelink CSI-RS in a reference signal burst of the first reference signal burst set.

53. The apparatus according to claim 52, wherein the first index is indicated in one or more of following manners:

sidelink control information SCI transmitted together with the first sidelink CSI-RS; or
a plurality of bits carried in the first sidelink CSI-RS.

54. The apparatus according to any one of claims 50 to 53, wherein a manner of transmitting the first sidelink CSI-RS comprises one of following:

the first sidelink CSI-RS is not transmitted together with a sidelink shared channel; or
the first sidelink CSI-RS is transmitted together with a sidelink shared channel.

55. The apparatus according to claim 54, wherein the transmission resource corresponding to the first sidelink CSI-RS is further used to transmit first information, the first information comprises identification information of the first terminal device and/or the target terminal device, the first sidelink CSI-RS is not transmitted together with a sidelink shared channel, and the first information is transmitted by using one or more of following: SCI, a sidelink primary synchronization signal S-PSS, and/or a sidelink secondary synchronization signal S-SSS.

56. The apparatus according to claim 54, wherein the transmission resource corresponding to the first sidelink CSI-RS is further used to transmit first information, the first information comprises identification information of the first terminal device and/or the target terminal device, the first sidelink CSI-RS is transmitted together with a physical sidelink shared channel PSSCH, and the first information is carried in first stage SCI corresponding to a physical sidelink control channel PSCCH and/or second stage SCI corresponding to a PSSCH.

57. The apparatus according to any one of claims 50 to 56, wherein the first parameter is determined based on first configuration of the first terminal device, and the first configuration is further used to indicate one or more of following:

a mapping relationship between the plurality of transmit beams and the transmission resource corresponding to the first sidelink CSI-RS;
a resource of a CSI report related to the first sidelink CSI-RS; or
a resource of a plurality of beam response signals or reports that are in a one-to-one correspondence with the plurality of transmit beams.

58. The apparatus according to claim 57, wherein the first configuration is further used to indicate the resource of the plurality of beam response signals or reports that are in the one-to-one correspondence with the plurality of transmit beams, and the beam response signals or reports are transmitted by using one or more of following: a medium access control control element MAC CE or a physical sidelink feedback channel PSFCH.

59. The apparatus according to any one of claims 50 to 58, wherein the target terminal device comprises the second terminal device, and the second terminal device further comprises:
a first transmitting unit, transmitting a beam response signal or report to the first terminal device, to determine a first beam pair, wherein the beam response signal or report is determined based on signal quality of a transmit beam received by the second terminal device, and the first beam pair is used for sidelink communication between the first terminal device and the second terminal device.

**60.** The apparatus according to claim 59, wherein the beam response signal or report transmitted by the second terminal device is used to indicate one or more of following information:

identification information of the second terminal device;
identification information of the first terminal device;
an identifier of a transmit beam and/or a receive beam corresponding to the beam response signal or report; or
information about association between a transmit beam and/or a receive beam corresponding to the beam response signal or report and a time resource.

**61.** The apparatus according to any one of claims 50 to 60, wherein the target terminal device comprises the second terminal device, the transmission resource corresponding to the first sidelink CSI-RS is further used to transmit second information, and the second information is used to instruct the second terminal device to perform resource sensing according to a received transmit beam and/or a receive beam corresponding to a received transmit beam.

**62.** The apparatus according to claim 61, wherein the first sidelink CSI-RS is used by the first terminal device and the second terminal device to determine a plurality of beam pairs, the plurality of beam pairs comprise a first beam pair and a second beam pair that are determined based on signal strength, and the second terminal device further comprises:

a second transmitting unit, transmitting a sensing result to the first terminal device; and
a transmission unit, if the sensing result indicates a resource conflict on a first resource related to the first beam pair, performing sidelink communication with the first terminal device by using the second beam pair, or receiving or transmitting a beam by using a second resource related to the first beam pair.

**63.** The apparatus according to any one of claims 50 to 62, wherein the target terminal device comprises the second terminal device, and the second terminal device further comprises:

a third transmitting unit, transmitting a beam response signal or report to the first terminal device; and
the receiving unit is further configured to receive third information transmitted by the first terminal device, wherein the third information is used to indicate whether the first terminal device establishes a connection with the second terminal device.

**64.** The apparatus according to any one of claims 50 to 63, wherein the target terminal device comprises the second terminal device, and one or more of following information related to the second terminal device is used by the first terminal device to determine a beam pair for establishing a connection with the second terminal device:

a time at which the second terminal device transmits a beam response signal or report;
signal quality in a beam response signal or report transmitted by the second terminal device;
a service priority of the second terminal device; or
quality of service QoS of the second terminal device.

**65.** A communications apparatus, comprising a memory and a processor, wherein the memory is configured to store a program, and the processor is configured to invoke the program in the memory to execute a method according to any one of claims 1 to 32.

**66.** An apparatus, comprising a processor, configured to invoke a program from a memory to execute a method according to any one of claims 1 to 32.

**67.** A chip, comprising a processor, configured to invoke a program from a memory, to cause a device on which the chip is installed to execute a method according to any one of claims 1 to 32.

**68.** A computer-readable storage medium, wherein a program is stored on the computer-readable storage medium, and the program causes a computer to execute a method according to any one of claims 1 to 32.

**69.** A computer program product, comprising a program, wherein the program causes a computer to execute a method according to any one of claims 1 to 32.

**70.** A computer program, wherein the computer program causes a computer to execute a method according to any one of claims 1 to 32.

**100**

110

Sidelink communication

123 ⟷ 124

121

Sidelink communication

122 ⟷

125

Sidelink communication

126 ⟷

127

128 ⟷ 129

FIG. 1

**200**

203

204

205

202

201

FIG. 2

310

RX1

RX2

RX3

320

TX1

TX2

TX3

FIG. 3

FIG. 4

Performing, by a first terminal device, transmission of a first sidelink CSI-RS by using a plurality of transmit beams — S510

FIG. 5

FIG. 6

FIG. 7

AGC | CSI-RS+SCI | GAP

FIG. 8

AGC | CSI-RS+SCI PSFCH (CSI-RS) | GAP

FIG. 9

AGC | CSI-RS PSFCH (CSI-RS) | GAP

FIG. 10

AGC | CSI-RS+PSCCH+PSSCH PSFCH (CSI-RS) | GAP

FIG. 11

AGC | CSI-RS+PSCCH+PSSCH PSFCH (CSI-RS)+PSFCH | GAP

FIG. 12

CSI-RS (1310) CSI-RS (1320) CSI-RS (1330) CSI-RS (1340)   MO1 MO2 MO3 MO4

FIG. 13

| First terminal device | | Second terminal device |
|---|---|---|
| S1410: Transmit beam sweeping | First sidelink CSI-RS → | S1420: Receive beam sweeping |

← S1430: Beam response signal

FIG. 14

1510 — 1520 —
1502
1504
1530 —
1506

FIG. 15

Apparatus 1600

Transmitting unit 1610

FIG. 16

Apparatus 1700

Receiving unit 1710

FIG. 17

Apparatus 1800

Processor
1810

Memory
1820

Transceiver
1830

FIG. 18

## INTERNATIONAL SEARCH REPORT

| International application No. |
| --- |
| **PCT/CN2023/102491** |

| A. | CLASSIFICATION OF SUBJECT MATTER |
| --- | --- |
| | H04W 72/04(2023.01)i |

According to International Patent Classification (IPC) or to both national classification and IPC

| B. | FIELDS SEARCHED |
| --- | --- |

Minimum documentation searched (classification system followed by classification symbols)

    IPC: H04W H04L

Documentation searched other than minimum documentation to the extent that such documents are included in the fields searched

Electronic data base consulted during the international search (name of data base and, where practicable, search terms used)

    CNTXT, ENTXTC, WPABSC, DWPI, 3GPP: 侧链, 侧行, 副链, 辅链, 边链, 旁链, 直连, 直接连接, 直通, 直接链路, 直接通信, 邻近通信, 装置到装置, 设备到设备, 用户设备到用户设备, 端到端, 信道状态信息参考信号, 周期, 重复, 波束, 空间, 空域, 配对, 匹配, 对齐, 对准, 偏移, 间隔, sidelink, SL, V2X, D2D, E2E, U2U, ProSe, PC5, CSI-RS, CSIRS, period, periodic +, repeat, repetition, beam, spatial, pair, match, align, offset, interval, gap

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2023028987 A1 (GUANGDONG OPPO MOBILE TELECOMMUNICATIONS CORP., LTD.) 09 March 2023 (2023-03-09)<br>    description, page 7, line 13-page 21, line 48 | 1-70 |
| X | US 2022399917 A1 (SAMSUNG ELECTRONICS CO., LTD.) 15 December 2022 (2022-12-15)<br>    claims 1 and 4, and description, paragraphs [0121]-[0255] | 1-70 |
| A | CN 116326135 A (BEIJING XIAOMI MOBILE SOFTWARE CO., LTD.) 23 June 2023 (2023-06-23)<br>    entire document | 1-70 |
| A | INTERDIGITAL, INC. "Physical Layer Structure for NR V2X Sidelink"<br>*3GPP TSG RAN WG1 #99, R1-1912738*, 22 November 2019 (2019-11-22),<br>    entire document | 1-70 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **29 November 2023** | **05 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/102491**

| Patent document cited in search report | | | Publication date (day/month/year) | Patent family member(s) | | | Publication date (day/month/year) |
|---|---|---|---|---|---|---|---|
| WO | 2023028987 | A1 | 09 March 2023 | None | | | |
| US | 2022399917 | A1 | 15 December 2022 | KR | 20210063170 | A | 01 June 2021 |
| | | | | EP | 4050810 | A1 | 31 August 2022 |
| | | | | WO | 2021101196 | A1 | 27 May 2021 |
| CN | 116326135 | A | 23 June 2023 | None | | | |

Form PCT/ISA/210 (patent family annex) (July 2022)